(19) Europäisches Patentamt / European Patent Office / Office européen des brevets

(11) **EP 3 075 088 B1**

(12) **FASCICULE DE BREVET EUROPEEN**

(45) Date de publication et mention de la délivrance du brevet:
**31.10.2018 Bulletin 2018/44**

(21) Numéro de dépôt: **14814975.0**

(22) Date de dépôt: **27.11.2014**

(51) Int Cl.:
*H04J 11/00* (2006.01)　　*H04W 52/24* (2009.01)
*H04W 16/32* (2009.01)　　*H04W 52/34* (2009.01)
*H04B 17/336* (2015.01)　　*H04L 29/08* (2006.01)
*H04W 84/12* (2009.01)

(86) Numéro de dépôt international:
**PCT/FR2014/053062**

(87) Numéro de publication internationale:
**WO 2015/079174 (04.06.2015 Gazette 2015/22)**

(54) **PROCÉDÉ DE COORDINATION D'ÉMETTEURS RADIO BASE SUR UN CODAGE DE NIVEAU DE PUISSANCE ÉMISE ET ÉMETTEUR CORRESPONDANT**

VERFAHREN ZUM KOORDINIEREN VON FUNKSENDERN AUF BASIS EINER CODIERUNG DES NIVEAUS DER ÜBERTRAGENEN ENERGIE UND ZUGEHÖRIGER SENDER

METHOD OF COORDINATING RADIO TRANSMITTERS BASED ON A CODING OF LEVEL OF POWER TRANSMITTED AND CORRESPONDING TRANSMITTER

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.11.2013 FR 1361885**

(43) Date de publication de la demande:
**05.10.2016 Bulletin 2016/40**

(73) Titulaire: **Orange**
**75015 Paris (FR)**

(72) Inventeurs:
• **LASAULCE, Samson**
**F-57690 Crehange (FR)**
• **SATHEESKUMAR VARMA, Vineeth**
**F-91440 Bures sur Yvette (FR)**
• **VISOZ, Raphaël**
**F-92170 Vanves (FR)**

(56) Documents cités:
**US-A1- 2012 083 201**

• **LARROUSSE BENJAMIN ET AL: "Coded power control: Performance analysis", 2013 IEEE INTERNATIONAL SYMPOSIUM ON INFORMATION THEORY, IEEE, 7 juillet 2013 (2013-07-07), pages 3040-3044, XP032497193, ISSN: 2157-8095, DOI: 10.1109/ISIT.2013.6620784 [extrait le 2013-10-03]**

## Description

### Domaine de l'invention

La présente invention se rapporte au domaine des télécommunications. Au sein de ce domaine, l'invention se rapporte aux techniques de coordination entre émetteurs d'une même technologie ou de technologies différentes qui utilisent des ressources radio communes sur une même zone géographique, c'est-à-dire sur une zone où les communications de l'un perturbent les communications d'un autre, on dit qu'il y a un phénomène d'interférence. L'invention se place dans le contexte d'un système de télécommunication à K émetteurs et K récepteurs qui communiquent respectivement avec les K émetteurs. Un émetteur peut tout aussi bien être une station de base qu'un point d'accès d'un réseau d'accès.

Le phénomène d'interférence peut être limité par des mécanismes de coordination pilotés par une entité de communication centrale à condition qu'il y ait une infrastructure (backhaul selon la terminologie anglo-saxonne) pour véhiculer les signaux de contrôle et de signalisation entre les émetteurs, les récepteurs et l'entité centrale. Ces mécanismes sont toutefois consommateur en bande passante. En outre, une telle infrastructure est absente lorsqu'un émetteur exploite une bande de fréquence sans licence dite bande libre (white space) et donc il ne peut y avoir de coordination possible. En ce qui concerne en particulier les transmissions basées sur la technologie sans fil de type WiFi qui s'appuie sur des standards de la série IEEE 802.11, leur qualité est menacée par l'explosion des objets communicants liés à l'Internet des objets (IoT) et l'explosion des réseaux de distribution avec remontée automatique d'information (smart grids). Les réseaux cellulaires ne sont pas exempts de risque car la tendance des déploiements à venir consiste à déployer des cellules dites femto (small cells) entre des stations de base pour augmenter la capacité tout en limitant l'infrastructure (backhaul) ce qui est contraire au besoin des mécanismes de coordination pour lutter contre les interférences.

### Art antérieur

Dans le contexte de l'invention, la transmission des communications entre émetteurs et récepteurs est considérée faite par un canal dit équivalent. Par canal équivalent, il faut comprendre le canal de propagation lui-même ainsi que les opérations de filtrages linéaires tant à l'émission qu'à la réception qui mènent à la structure mathématique du rapport signal à bruit plus interférence retenue. Dans la suite, le terme générique canal est utilisé en lieu et place du terme canal équivalent. On désigne par gain de canal (équivalent), le carré du module du coefficient dominant de la réponse impulsionnelle du canal, le carré du module de la réponse en fréquence du canal pour la fréquence m ou bien encore le rapport entre la puissance du signal reçu par le récepteur sur toute la bande m et la puissance émise, rapport qui serait mesuré en l'absence d'interférence des autres émetteurs. L'indice m dit de canal ou de fréquence peut prendre une valeur parmi M valeurs. Par M on désigne le nombre de voies de retour disponibles pour le système de communication considéré, chaque voie de retour étant caractérisée par un rapport signal à bruit plus interférence SINR qui lui est propre.

De [1], il est connu l'utilisation d'un motif de puissances émises pouvant servir à des fins de mesures des canaux qui peuvent être remontées à la fin de chaque niveau de puissance émise.

De [2], il est connu un algorithme d'allocation de puissance émise par un émetteur lors d'une communication avec un récepteur via une liaison point à point. Cet algorithme est connu sous l'acronyme IWFA (Iterative WaterFilling Algorithm). L'allocation de puissance entre les M canaux orthogonaux de la liaison point à point est déterminée en exploitant uniquement la connaissance du rapport signal à interférence plus bruit ou SINR (Signal to Interference plus Noise Ratio) connu pour chacun de ces canaux fréquentiels, $M \geq 1$. Les gains/coefficients de canaux sont supposés soit constants soit constant par morceau. Dans le dernier cas, les gains de canaux sont donc stationnaires sur une durée appelée temps Tc de cohérence. L'IWFA opère sur une durée T inférieure ou égale à ce temps de cohérence, $T \leq Tc$, selon un mode privilégié. L'algorithme considère un système de télécommunication à K émetteurs et K récepteurs, $K \geq 2$. L'algorithme IWFA découpe le temps en trames successives et chaque trame comprend $K$ sous-trames. La durée d'une trame correspond à la durée d'une itération de l'algorithme IWFA. Un émetteur ne peut mettre à jour la puissance allouée qu'une seule fois par trame. La trame correspond donc à la durée minimale nécessaire pour que les K émetteurs mettent à jour leur puissance allouée. L'algorithme considère un ordre arbitraire entre les émetteurs pour la mise à jour de leur puissance. Sans perte de généralité, l'émetteur 1 est celui qui met à jour en premier et ainsi de suite. L'algorithme IWFA suppose implicitement un mécanisme de synchronisation au niveau trame (boucle externe) et au niveau intervalle de temps correspondant à une sous-trame (boucle interne).

De [4], il est connu un procédé d'échange par encodage d'informations sur l'état du canal dans des séquences de niveaux de puissance émises par les émetteurs.

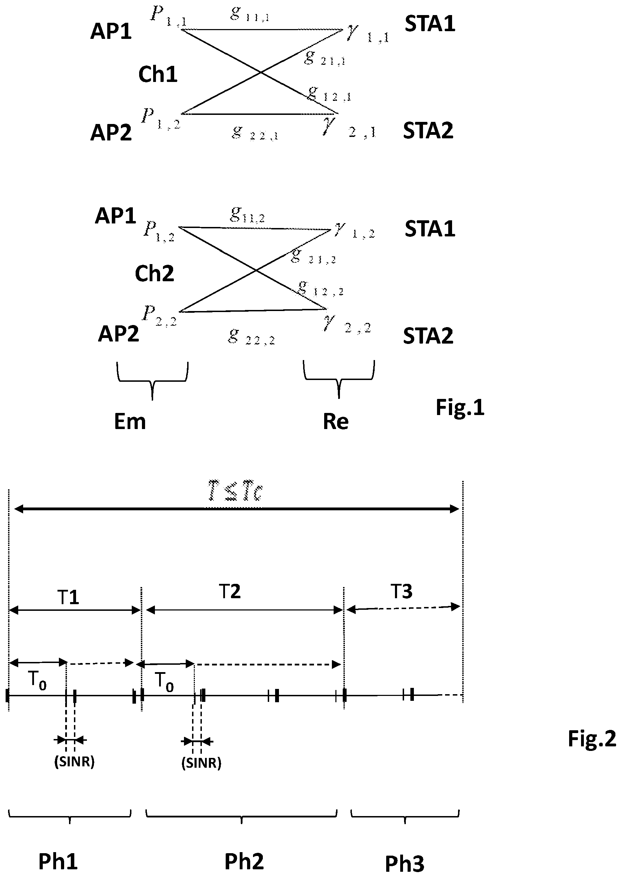

La figure 1 illustre un système de télécommunication avec deux émetteurs et deux récepteurs, K=2. Le nombre de canaux par liaison est M=2. Le coefficient de canal appelé aussi gain de canal entre l'émetteur i et le récepteur j pour le canal m est noté $g_{ij,m}$ , il est supérieur ou égal à zéro. La puissance allouée par l'émetteur i pour le canal m est notée $P_{i,m}$ . Le SINR évalué par le récepteur j pour le canal m est noté $\gamma_{j,m}$ . Le côté émission est noté Em et le côté réception est noté Re. L'expression du SINR est celle correspondant au signal reçu par un récepteur i du type sans annulation d'interférence servi par l'émetteur i et interféré par les émetteurs j avec $j \neq i$ :

$$\gamma_{i,m} = \frac{g_{ii,m}P_{i,m}}{1+\sum_{j\neq i}g_{ji,m}P_{j,m}} , \tag{1}$$

L'algorithme comprend une phase d'initialisation qui correspond à l'indice de sous trame t égal à zéro. Pendant cette phase, chaque émetteur $i \in \{1,2,...,K\}$ alloue la puissance $P_{i,m}(0)$ au canal $m \in \{1,2,...,M\}$. Pour chaque émetteur, les M puissances allouées forment un vecteur d'allocation. Les vecteurs d'allocation peuvent être choisis arbitrairement à condition que chacun respecte la contrainte de puissance totale $P_{i,\max}$ disponible à l'émetteur i considéré :

$$\sum_{m=1}^{M}P_{i,m}(0) \leq P_{i,\max} \tag{2}$$

L'algorithme comprend ensuite une phase d'itérations sur l'indice k de trames (dite boucle externe), de k=0 à un critère d'arrêt. A chaque itération k, l'algorithme comprend une phase d'itérations sur l'indice i d'émetteurs (dite boucle interne), de i=1 à K. A chaque itération i, l'algorithme calcule l'indice de sous trame $t=kK+i$ et met à jour le vecteur de puissance de l'émetteur i :

$$P_{i,m}(t) = \left[\frac{1}{\lambda} - \frac{P_{i,m}(t-1)}{\gamma_{i,m}(t-1)}\right]^{+} \tag{3}$$

où $\lambda$ est un paramètre à régler de manière à ce que la somme des puissances $\sum_{m}P_{i,m}$ du vecteur égale la puissance max $P_{i,\max}$ et où $[x]^{+} = \max(0,x)$.

Le critère d'arrêt de la phase d'itérations sur l'indice k de trames est par exemple déterminé tel que :

$$\forall i \in \{1,2,...,K\}, \forall m \in \{1,2,...,M\}, \left|P_{i,m}(t) - P_{i,m}(t-1)\right| > \varepsilon \tag{4}$$

où $\varepsilon \geq 0$ est un paramètre à fixer.

L'algorithme se déroule de la façon suivante. A chaque itération i, un seul émetteur met à jour le vecteur de puissance d'émission allouée, puis les émetteurs émettent simultanément et réceptionnent ensuite les SINR respectifs remontés par les récepteurs.

L'algorithme IWFA ne peut être utilisé lorsque l'ensemble des configurations de l'émetteur est fini. L'IWFA ne peut être utilisé dans le cas où l'émetteur a un nombre fini de possibilités d'allocation/contrôle de puissance c'est-à-dire le cas où le niveau de puissance total ou par bande est discret. En effet, tout comme la solution dite de water-filling, l'IFWA repose sur une opération de différentiation (dérivée) par rapport une quantité continue, cette opération ne peut être réalisée par rapport à une quantité discrète. De plus, l'IWFA est un cas particulier de dynamique séquentielle de meilleure réponse connue pour ne pas converger lorsque l'espace d'optimisation est discret. Une telle contrainte n'est pas compatible des réseaux de télécommunications dits 3G et de ses versions ultérieures normalisés au 3GPP et connus sous les acronymes UMTS, LTE, LTE advanced,...,imposent que les niveaux de puissance soient discrets.

L'algorithme IWFA ne converge que pour des fonctions d'utilité très particulières. En effet, la convergence est garantie pour le scénario des récepteurs co-localisés et des fonctions d'utilité de type débits de transmission de Shannon dont l'expression correspond à l'équation (5). Il peut cependant être utilisé pour n'importe quelle fonction d'utilité mais sans aucune garantie sur les performances obtenues. En effet, la formule (3) de mise à jour permet d'assurer la convergence pour les fonctions d'utilité suivantes :

$$u_i = \sum^{m}\log_2\left(1+\gamma_{i,m}\right) \tag{5}$$

uniquement si le SINR correspond au cas d'un canal à accès multiple multi-bande ou multi-voie i.e., au cas d'un système de communication à $K$ émetteurs et un seul récepteur. Pour le cas à $K$ récepteurs non co-localisés, la convergence n'est assurée pour les fonctions d'utilités selon la relation (5) que lorsque les niveaux d'interférence sont faibles..

**Exposé de l'invention**

L'invention propose une technique permettant d'améliorer la coordination des émetteurs d'un système de télécommunication en déterminant l'allocation de puissance émise par les émetteurs qui minimise les interférences au niveau des récepteurs.

L'objet de l'invention est défini par les revendications indépendantes. Des modes de réalisation sont décrits dans les revendications dépendantes.

Ainsi, l'invention a pour objet un procédé de coordination d'un émetteur avec K-1 émetteurs, les K émetteurs étant en communication respectivement avec K récepteurs via des canaux caractérisés, pour une bande m de fréquence entre l'émetteur j et le récepteur i, par des gains de canaux de transmission directs lorsque $j = i$ et des gains de canaux de transmission interférents lorsque $j \neq i$, $i \in \{1,...,K\}$, $j \in \{1,...,K\}$, $m \in \{1,..., M\}$, K>1, chaque émetteur disposant d'estimations du gain de canal direct et des gains de canaux interférant son récepteur. Le procédé comprend :

- une phase dite d'échange pendant laquelle les K émetteurs émettent simultanément respectivement K séquences de T2 sous trames de respectivement T2 niveaux de puissance par bande m codant les gains de canaux estimés et pendant laquelle les K émetteurs réceptionnent après chaque sous trame des estimations de SINR basées sur des observations d'un signal reçu remontées par les K récepteurs à leur émetteur respectif, $T2 \geq 1$.

Il existe des techniques connues permettant à un émetteur i de connaître l'estimation du gain de canal direct $g_{ii,m}$ et des gains des canaux interférant $g_{ji,m}$ son récepteur i, $j \neq i$. Lors de la phase d'échange les émetteurs échangent leurs gains de canaux estimés en les encodant selon un codage de niveaux de puissance. Le coefficient $g_{ii,m}$, $g_{ij,m}$ peut modéliser aussi bien le coefficient d'affaiblissement lié à la propagation (path loss) que le coefficient d'affaiblissement lié aux évanouissements lents (shadowing) ou rapides (fast fading).

Un émetteur émet donc successivement T2 sous trames dont les niveaux de puissance associés codent les estimations des gains de canaux dont l'émetteur a la connaissance. Le récepteur remonte une estimation d'un rapport signal à interférence plus bruit (SINR) à son émetteur à la fin d'une sous trame. L'estimation est effectuée à partir d'observations du signal reçu pendant que les K émetteurs émettent simultanément une sous trame. L'estimation du SINR remontée peut tout aussi bien être exprimée sous la forme d'une estimation d'une puissance utile et d'une estimation d'une puissance d'interférence comprenant le bruit, que sous la forme d'une estimation du rapport de ces puissances ou sous toute autre forme permettant d'en déduire le SINR.

L'estimation est généralement bruitée notamment compte tenu que l'information remontée par la voie de retour est quantifiée. L'estimation remontée peut être le résultat d'un moyennage. Par exemple dans le cas d'une bande m qui regroupe plusieurs sous porteuses bande étroite le moyennage peut consister à effectuer l'estimation sur l'ensemble ou un sous ensemble des sous porteuses. Un émetteur dispose ainsi à la fin de la succession de T2 sous trames de T2 estimations d'un rapport signal à interférence plus bruit évalué par son récepteur. Après la dernière sous-trame, l'émetteur i dispose d'un système de T2 équations avec T2x(K-1) inconnues qui sont les puissances émises par les K-1 émetteurs et reçues par son récepteur. L'estimation des niveaux de puissances émises par les autres émetteurs peut consister pour l'émetteur i à choisir la séquence la plus vraisemblable au sens du Maximum de vraisemblance. Connaissant les puissances émises par les autres émetteurs, l'émetteur peut déterminer les gains de canaux correspondant par décodage des niveaux de puissance des puissances émises. Finalement à la fin de la phase d'échange, chaque émetteur connait tous les gains de canaux. Ainsi chaque émetteur peut déterminer sa puissance d'émission selon un critère de minimisation d'interférence globale pour l'ensemble des K émetteurs. Ainsi, le procédé selon l'invention converge vers une allocation de puissance dont l'efficacité est globale c'est-à-dire évaluée au niveau du système contrairement à l'algorithme IWFA qui converge vers une allocation de puissance à efficacité locale c'est-à-dire évaluée au niveau d'un émetteur. Contrairement à l'algorithme IWFA, le procédé selon l'invention ne repose pas sur une méthode itérative ce qui permet d'éviter le problème de convergence de l'algorithme IWFA. En outre, l'invention est compatible de toutes sortes de fonction d'utilités dont le choix dépend uniquement des politiques de contrôle de puissance et des gains de canaux du système de communication considéré.

Selon un mode de réalisation, l'estimation des gains de canaux est effectuée pendant une phase d'acquisition de gains de canaux de transmission sur une bande m de fréquence entre l'émetteur j et le récepteur i pendant laquelle les K émetteurs émettent simultanément respectivement des séquences de T1 sous trames de respectivement T1 niveaux de puissance déterminés et pendant laquelle les K émetteurs réceptionnent après une sous trame des estimations d'un SINR remontées par les K récepteurs à leurs émetteurs respectifs.

Selon ce mode de réalisation, le procédé comprend une phase d'acquisition particulière. Selon cette phase d'acquisition, les émetteurs participant à la coordination émettent une succession de T1 niveaux de puissance qui sont l'équivalent d'une séquence d'apprentissage. Ces séquences d'apprentissage sont connues des émetteurs, c'est-à-dire qu'un émetteur connait les niveaux de puissance émis successivement pendant les T1 sous trames par chacun des K-1 émetteurs. Un récepteur estime T1 fois le rapport signal à interférence plus bruit (SINR) reçu. Le récepteur remonte à son émetteur à la fin d'une sous trame, la valeur estimée du SINR. Un émetteur dispose ainsi à la fin de la séquence d'apprentissage de T1 estimations du rapport signal à interférence plus bruit estimé par son récepteur. Le SINR peut être exprimé sous la forme générale suivante : $\gamma_{i,m} = f(\{P_{i,m}\}_{i=1}^{K}, \{g_{ji,m}\}_{j=1}^{K})$ ou $\gamma_{i,m} = f(\{P_{i,m}\}_{i=1}^{K}, E\{g_{ji,m}\}_{j=1}^{K})$ ou

sous la forme : $\gamma_{i,m} = \dfrac{g_{ii,m}P_{i,m}}{1 + \sum_{j \neq i} g_{ji,m}P_{j,m}}$ . L'expression du SINR dépendant du canal direct entre l'émetteur i et son récepteur i, des canaux interférant le récepteur i et des puissances d'émission des K émetteurs, l'émetteur i dispose d'un système de T1 équations avec K inconnues qui sont les gains de canaux $g_{ji,m}$ pour $j \in \{1,...,K\}$. L'émetteur peut donc obtenir une estimation des K gains de canaux $\hat{g}_{ji,m}$ en résolvant le système d'équations. Si la matrice des puissances émises est inversible, il est aisé de résoudre le système d'équations en inversant cette matrice.

Selon un mode de réalisation, le nombre T1 de sous trames est égal à K.

Ce choix judicieux permet de minimiser le nombre de sous trames émises et le nombre de calculs.

Selon un mode de réalisation, le nombre T1 de sous trames est égal à K-X avec X le nombre de gains de canaux connus d'un émetteur.

Selon un mode de réalisation, les rapports signal à interférence plus bruit remontés par les récepteurs sont normalisés.

Ce mode a pour avantage de simplifier le procédé en évitant de considérer le bruit observé par les récepteurs lors de l'estimation des gains de canaux et lors de la phase d'échange. Selon ce mode, le rapport signal à interférence plus bruit peut s'exprimer sous la forme suivante : $\gamma_i^m = \dfrac{g_{ii}^m P_{i,m}}{1 + \sum_{j \neq i} g_{ji}^m P_j^m}$ avec $g_{ij}^m = \dfrac{h_{ij}^m}{\sigma_i^2}$ . Ce mode réduit avantageusement le coût de signalisation puisqu'il permet d'éviter de remonter les variances de bruit $\sigma_i^2$ aux émetteurs.

Selon un mode de réalisation, la détermination des niveaux de puissance de la séquence de T1 sous trames d'un émetteur est effectuée sous contrainte que la matrice $S_{i,m}$ soit pseudo-inversible au sens de Moore Penrose avec une probabilité proche de un, cette matrice $S_{i,m}$ étant :

$$S_{i,m} = \begin{pmatrix} -\hat{\gamma}_{i,m}(1)P_{1,m}(1) & -\hat{\gamma}_{i,m}(1)P_{2,m}(1) & \ldots & P_{i,m}(1) & \ldots & -\hat{\gamma}_{i,m}(1)P_{K,m}(1) \\ -\hat{\gamma}_{i,m}(2)P_{1,m}(2) & -\hat{\gamma}_{i,m}(2)P_{2,m}(2) & \ldots & P_{i,m}(2) & \ldots & -\hat{\gamma}_{i,m}(2)P_{K,m}(2) \\ \vdots & \vdots & & \vdots & & \vdots \\ -\hat{\gamma}_{i,m}(T1)P_{1,m}(T1) & -\hat{\gamma}_{i,m}(T1)P_{2,m}(T1) & \ldots & P_{i,m}(T1) & \ldots & -\hat{\gamma}_{i,m}(T1)P_{K,m}(T1) \end{pmatrix}$$

avec $\hat{\gamma}_{i,m}(t)$ l'estimation du rapport signal à interférence plus bruit remonté par le récepteur i à l'émetteur i, $P_{i,m}(t)$ les niveaux déterminés de puissance de la séquence de T1 sous trames, $t \in \{1,2,...,T1\}$.

Ce mode de détermination des niveaux de puissance est avantageux en ce que la matrice $S_{i,m}$ est pseudo inversible et donc la résolution du système d'équations à K inconnues est aisé. Les K gains de canaux peuvent être estimés selon la relation suivante :

$$\begin{pmatrix} \hat{g}_{1i,m} \\ \vdots \\ \hat{g}_{Ki,m} \end{pmatrix} = \left(\overline{S_{i,m}}\,S_{i,m}\right)^{-1} \overline{S_{i,m}} \times \begin{pmatrix} \hat{\gamma}_{i,m}(1) \\ \vdots \\ \hat{\gamma}_{i,m}(T1) \end{pmatrix}$$

Selon un mode de réalisation, la détermination des niveaux de puissance de la séquence de T1 sous trames d'un émetteur est effectuée selon un tirage aléatoire jusqu'à ce que la matrice $\Omega_{i,m}$ soit de rang plein :

$$\Omega_{i,m} = \begin{pmatrix} P_{1,m}(1) & P_{2,m}(1) & \dots & P_{i,m}(1) & \dots & P_{K,m}(1) \\ P_{1,m}(2) & P_{2,m}(2) & \dots & P_{i,m}(2) & \dots & P_{K,m}(2) \\ \vdots & \vdots & & \vdots & & \vdots \\ P_{1,m}(T1) & P_{2,m}(T1) & \dots & P_{i,m}(T1) & \dots & P_{K,m}(T1) \end{pmatrix}$$ avec $P_{i,m}(t)$ les niveaux déterminés de puissance de la séquence de T1 sous trames, $t \in \{1,2,...,T1\}$.

Ce mode de réalisation permet de déterminer simplement les niveaux de puissance des séquences de T1 sous trames de chaque émetteur.

Selon un mode de réalisation, le codage en niveaux de puissance est un codage source-canal conjoint de type spatio-temporel dont la dimension spatiale correspond au nombre M de canaux m et la dimension temporelle correspond au nombre T2 de sous-trames.

Ce mode de réalisation permet de bénéficier d'un codage optimal.

Selon un mode de réalisation, le codage en niveaux de puissance est un codage source-canal séparé.

Ce mode de réalisation permet de bénéficier d'un codage moins complexe qu'un codage source-canal conjoint.

Selon un mode de réalisation, l'estimation des rapports signal à interférence plus bruit est effectuée avant filtrage, ce filtrage étant associé à une détection du signal reçu.

Une alternative à ce mode de réalisation consiste à ce que le récepteur estime le SINR après le filtrage associé à la détection du signal reçu. L'estimation avant filtrage a pour avantage d'être indépendante des caractéristiques du filtre qui peuvent dépendre des puissances des interféreurs.

L'invention a en outre pour objet un émetteur destiné à mettre en oeuvre un procédé de coordination avec K-1 émetteurs, les K émetteurs étant en communication respectivement avec K récepteurs via des canaux caractérisés, pour une bande m de fréquence entre l'émetteur j et le récepteur i, par des gains de canaux de transmission directs lorsque $j = i$ et des gains de canaux de transmission interférents lorsque $j \neq i$, l'émetteur disposant d'estimations du gain de canal direct et des gains de canaux interférant son récepteur. L'émetteur comprend :

- une unité de traitement pour coder les gains de canaux estimés en une séquence de T2 sous trames de respectivement T2 niveaux de puissance par bande m,
- un module d'émission de la séquence,
- un module de réception de valeurs estimées d'un SINR remontées par le récepteur après chaque sous-trame.

L'invention a en outre pour objet un système de télécommunication comprenant K émetteurs selon l'objet précédent.

Selon une implémentation préférée, les étapes du procédé de coordination selon l'invention sont déterminées par les instructions d'un programme incorporé dans un circuit électronique telle une puce elle-même pouvant être disposée dans un dispositif électronique tel une entité de communication (station de base, point d'accès, etc). Le procédé de coordination selon l'invention peut tout aussi bien être mis en oeuvre lorsque ce programme est chargé dans un organe de calcul tel un processeur ou équivalent dont le fonctionnement est alors commandé par l'exécution du programme.

En conséquence, l'invention s'applique également à un programme d'ordinateur, notamment un programme d'ordinateur sur ou dans un support d'informations, adapté à mettre en oeuvre l'invention. Ce programme peut utiliser n'importe quel langage de programmation, et être sous la forme de code source, code objet, ou de code intermédiaire entre code source et code objet tel que dans une forme partiellement compilée, ou dans n'importe quelle autre forme souhaitable pour implémenter un procédé selon l'invention.

Le support d'informations peut être n'importe quel dispositif capable de stocker le programme. Par exemple, le support peut comporter un moyen de stockage, tel qu'une ROM, par exemple un CD ROM, une clé USB ou une ROM de circuit microélectronique, ou encore un moyen d'enregistrement magnétique, par un disque dur.

Alternativement, le support d'informations peut être un circuit intégré dans lequel le programme est incorporé, le circuit étant adapté pour exécuter ou pour être utilisé dans l'exécution du procédé en question.

D'autre part, le programme peut être traduit en une forme transmissible telle qu'un signal électrique ou optique, qui peut être acheminé via un câble électrique ou optique, par radio ou par d'autres moyens. Le programme selon l'invention peut être en particulier téléchargé sur un réseau de type Internet.

**Liste des figures**

D'autres caractéristiques et avantages de l'invention apparaîtront lors de la description qui suit d'exemples particuliers faite en regard de figures annexées données à titre d'exemples non limitatifs.

La figure 1 est une représentation schématique des canaux entre deux émetteurs et deux récepteurs, ces canaux étant décrits par des gains $g_{ji,m}$ de canaux de transmission directs lorsque $j = i$ et des gains $g_{ji,m}$ de canaux de transmission interférents lorsque $j \neq i$ entre l'émetteur j et le récepteur i, $i \in \{1,2\}$, $j \in \{1,2\}$.

La figure 2 est un schéma des trois phases d'un procédé selon l'invention selon un mode de réalisation particulier.

La figure 3 est un schéma de la structure simplifiée d'un émetteur selon l'invention.

La figure 4 représente des résultats de simulation comparant la méthode IWFA de l'art antérieur et le procédé selon l'invention.

## Description d'un mode de réalisation de l'invention

Les gains/coefficients des canaux sont supposés soit constants soit constants par morceaux. Dans le dernier cas, les gains de canaux sont donc stationnaires sur une durée Tc appelée durée de cohérence. Le procédé selon l'invention opère sur une durée T inférieure ou égale à cette durée de cohérence, $T \leq Tc$, selon un mode privilégié, de même que l'algorithme IWFA de l'art antérieur.

Dans une prise en compte d'évanouissements rapides, les canaux correspondant à une sous bande m sont supposés stationnaires sur la durée T avec $T \leq Tc$ ce qui permet d'omettre l'indice temporel (ou du symbole OFDM dans le cas d'une émission multi porteuses) pour les coefficients du canal. On note C le nombre de porteuses consécutives définissant la Bande de Cohérence. Soient les signaux reçus ou observations disponibles correspondant à une sous-trame de durée $T_0 \leq T \leq T_c$ ($T_0$ symboles OFDM dans le cas d'une émission multi porteuses) $\mathbf{y}_{i,m}^{(n)}(k) \in \mathbb{C}^{N_R}$ par le récepteur i équipé de $N_R$ antennes pour la sous bande m comprenant N porteuses bandes étroites, n étant l'indice de numérotation des porteuses à l'intérieur de la sous bande m, et k l'indice du symbole OFDM (les observations/échantillons utiles pour estimer le SINR sont liées à l'ensemble des indice n, k disponibles en temps et en fréquence pour un récepteur i et une sous bande m), ils peuvent s'exprimer sous la forme :

$$\mathbf{y}_{i,m}^{(n)}(k) = \mathbf{h}_{ii,m}^{(n)} s_{i,m}^{(n)}(k) + \sum_{j \neq i} \mathbf{h}_{ji,m}^{(n)} s_{j,m}^{(n)}(k) + w_{i,m}^{(n)}(k) \quad \forall n = 0, \cdots, N-1 \; \forall k = 0, \cdots, T_0 - 1 \qquad (6)$$

où $\mathbf{h}_{ji,m}^{(n)} \in \mathbb{C}^{N_R}$ est le canal à entrée scalaire et sortie vectorielle entre l'émetteur j et le récepteur i pour la sous-bande m, où $w_{i,m}^{(n)}(k)$ est un échantillon de bruit blanc gaussien additif de variance $\sigma_i^2$ et où $P_{i,m}$ est la puissance émise associée au signal émis $s_{i,m}^{(n)}(k)$ qui est supposée constante pour toutes les porteuses de la sous bande m, $\forall i = 1,...,K$. Sans perte de généralité, il est supposé que N est divisible par C, c.a.d., Q=N/C. Il vient que la sous bande m peut être divisée en Q blocs où les coefficients du canal sont approximativement constant (Q-Block Fading en anglais). Soit $n = Cq + c$, la division entière de n par C ayant pour dividende q et reste c avec c variant de 0 à C-1 par définition, l'expression (6) peut s'écrire sous la forme :

$$\mathbf{y}_{i,m}^{(Cq+c)}(k) = \mathbf{h}_{ii,m}^{(q)} s_{i,m}^{(Cq+c)}(k) + \sum_{j \neq i} \mathbf{h}_{ji,m}^{(q)} s_{j,m}^{(Cq+c)}(k) + w_{i,m}^{(Cq+c)}(k) \quad q = 0, \cdots, Q-1 \text{ et } c = 0, \cdots, C-1 \qquad (7)$$

$$\text{où } \mathbf{h}_{ji,m}^{(q)} = \frac{1}{C} \sum_{c=0}^{C-1} \mathbf{h}_{ji,m}^{(Cq+c)} \quad \text{avec } q = 0, \cdots, Q-1$$

Le SINR associé à la sous bande m pour le récepteur i est estimé sur la base des observations disponibles $\mathbf{y}_{i,m}^{(n)}(k)$ sur une durée d'observation $T_0$ d'une sous-trame ($T_0 < T_c$) et sur la connaissance disponible des canaux incidents et des puissances des autres émetteurs. Lorsque le SINR est estimé, la notation suivante est utilisée $\hat{\gamma}_{i,m}$ pour le récepteur i et la bande m. L'estimation est par définition entachée d'un bruit d'estimation $\xi_{i,m}$, il vient :

$$\hat{\gamma}_{i,m} = \gamma_{i,m} + \xi_{i,m}$$

où $\gamma_{i,m}$ est la valeur théorique du SINR calculée sur la base d'une connaissance parfaite (sans bruit) de tous les canaux incidents et de toutes les puissance des émetteurs. A noter que plus la durée d'observation $T_0$ est grande, plus le nombre d'observations disponibles $y_{i,m}^{(n)}(k)$ est important et donc plus le bruit d'estimation $\xi_{i,m}$ est faible. C'est un aspect pratique important du procédé pour fixer la durée d'une sous-trame (en plus des considérations de stationnarité en temps).

Le SINR remonté par le récepteur peut être pris en compte avant ou après filtrage.

Après filtrage, le SINR prend en compte le filtre de réception associé au détecteur du signal reçu. Dans ce cas, il est considéré un filtre linéaire $\mathbf{f}_{ii,m}^{(q)} \in \mathbb{C}^{N_R}$ appliqué en réception sur les échantillons $n = Cq + c$ avec c variant de 0 à C-1. La sous bande m peut être définie par les Q SINRs théoriques, avec l'opérateur transposé conjugué :

$$\gamma_{i,m}^{(q)} = \frac{\left|\left(\mathbf{f}_{ii,m}^{(q)}\right)^{\dagger} \mathbf{h}_{ii,m}^{(q)}\right|^2 P_{i,m}}{\sigma_i^2 \left(\mathbf{f}_{ii,m}^{(q)}\right)^{\dagger} \mathbf{f}_{ii,m}^{(q)} + \sum_{j \neq i} \left|\left(\mathbf{f}_{ii,m}^{(q)}\right)^{\dagger} \mathbf{h}_{ji,m}^{(q)}\right|^2 P_{j,m}}$$

La sous bande m peut être définie par l'unique SINR théorique équivalent :

$$\gamma_{i,m} = \frac{P_{i,m} \frac{1}{Q} \sum_{q=0}^{Q-1} \left|\left(\mathbf{f}_{ii,m}^{(q)}\right)^{\dagger} \mathbf{h}_{ii,m}^{(q)}\right|^2}{\frac{\sigma_i^2}{Q} \sum_{q=0}^{Q-1} \left(\mathbf{f}_{ii,m}^{(q)}\right)^{\dagger} \mathbf{f}_{ii,m}^{(q)} + \sum_{j \neq i} P_{j,m} \frac{1}{Q} \sum_{q=0}^{Q-1} \left|\left(\mathbf{f}_{ii,m}^{(q)}\right)^{\dagger} \mathbf{h}_{ji,m}^{(q)}\right|^2}$$

$$= \frac{P_{i,m} \dfrac{\sum_{q=0}^{Q-1} \left|\left(\mathbf{f}_{ii,m}^{(q)}\right)^{\dagger} \mathbf{h}_{ii,m}^{(q)}\right|^2}{\sigma_i^2 \sum_{q=0}^{Q-1} \left(\mathbf{f}_{ii,m}^{(q)}\right)^{\dagger} \mathbf{f}_{ii,m}^{(q)}}}{1 + \sum_{j \neq i} P_{j,m} \dfrac{\sum_{q=0}^{Q-1} \left|\left(\mathbf{f}_{ii,m}^{(q)}\right)^{\dagger} \mathbf{h}_{ji,m}^{(q)}\right|^2}{\sigma_i^2 \sum_{q=0}^{Q-1} \left(\mathbf{f}_{ii,m}^{(q)}\right)^{\dagger} \mathbf{f}_{ii,m}^{(q)}}} \qquad (8)$$

$$= \frac{g_{ii,m} P_{i,m}}{1 + \sum_{j \neq i} g_{ji,m} P_{j,m}}$$

où $\quad g_{ii,m} = \dfrac{\sum_{q=0}^{Q-1} \left|\left(\mathbf{f}_{ii,m}^{(q)}\right)^{\dagger} \mathbf{h}_{ii,m}^{(q)}\right|^2}{\sigma_i^2 \sum_{q=0}^{Q-1} \left(\mathbf{f}_{ii,m}^{(q)}\right)^{\dagger} \mathbf{f}_{ii,m}^{(q)}} \in \mathbb{R}^+ \quad \forall j \neq i \quad g_{ji,m} = \dfrac{\sum_{q=0}^{Q-1} \left|\left(\mathbf{f}_{ii,m}^{(q)}\right)^{\dagger} \mathbf{h}_{ji,m}^{(q)}\right|^2}{\sigma_i^2 \sum_{q=0}^{Q-1} \left(\mathbf{f}_{ii,m}^{(q)}\right)^{\dagger} \mathbf{f}_{ii,m}^{(q)}} \in \mathbb{R}^+$ et sont définis comme les canaux équivalents (appartenant à l'ensemble des réels $\mathbb{R}^+$) entre l'émetteur j et le récepteur i pour la bande m.

Dans le cas où $N_R = 1$ et $Q = 1$, il vient en posant $f_{ii,m}^{(0)} = h_{ii,m}^{(0)}{}^{\dagger}$ (filtre adapté) :

$$g_{ii,m} = \frac{\left|h_{ii,m}^{(0)}\right|^2}{\sigma_i^2} \in \mathbb{R}^+ \text{ et } \forall j \neq i \quad g_{ji,m} = \frac{\left|h_{ji,m}^{(0)}\right|^2}{\sigma_i^2} \in \mathbb{R}^+$$

Le SINR équivalent estimé au niveau du récepteur i pour la sous bande m peut être estimé dans un mode privilégié comme suit.

Les échantillons $z_{i,m}^{(n)}(k)$ après filtrage s'expriment par la relation:

$$z_{i,m}^{(n)}(k) = \mathbf{f}_{ii,m}^{(q)\dagger}\mathbf{h}_{ii,m}^{(q)}s_{i,m}^{(n)}(k) + \sum_{j\neq i}\mathbf{f}_{ii,m}^{(q)\dagger}\mathbf{h}_{ji,m}^{(q)}s_{j,m}^{(n)}(k) + \mathbf{f}_{ii,m}^{(q)\dagger}w_{i,m}^{(n)}(k) \quad \text{avec} \quad n = Cq + c$$

Une estimation du SINR équivalent basée sur la connaissance des échantillons $z_{i,m}^{(n)}(k)$ (après filtrage) et des symboles transmis $s_{i,m}^{(Cq+c)}(k)$ (symboles pilotes) sur la durée d'observation $T_0$, ainsi que du canal estimé $\hat{h}_{ii,m}^{(Cq+c)}$ (calculé à partir des symboles pilotes) s'exprime sous la forme :

$$\hat{\gamma}_{i,m} = \frac{\dfrac{1}{T_0 CQ}\sum_{k,c,q}\hat{\mathbf{h}}_{ii,m}^{(q)\dagger}\mathbf{f}_{ii,m}^{(q)}z_{i,m}^{(Cq+c)}(k)s_{i,m}^{(Cq+c)\dagger}(k)}{\dfrac{1}{T_0 CQ}\sum_{k,c,q}\left(z_{i,m}^{(Cq+c)}(k) - \mathbf{f}_{ii,m}^{(q)\dagger}\hat{\mathbf{h}}_{ii,m}^{(Cq+c)}s_{i,m}^{(Cq+c)}(k)\right)^{\dagger}\left(z_{i,m}^{(Cq+c)}(k) - \mathbf{f}_{ii,m}^{(q)\dagger}\hat{\mathbf{h}}_{ii,m}^{(Cq+c)}s_{i,m}^{(Cq+c)}(k)\right)}$$

$$\simeq \frac{P_{i,m}\dfrac{1}{Q}\sum_{q=0}^{Q-1}\left|\left(\mathbf{f}_{ii,m}^{(q)}\right)^{\dagger}\mathbf{h}_{ii,m}^{(q)}\right|^2}{\dfrac{\sigma_i^2}{Q}\sum_{q=0}^{Q-1}\left(\mathbf{f}_{ii,m}^{(q)}\right)^{\dagger}\mathbf{f}_{ii,m}^{(q)} + \sum_{j\neq i}P_{j,m}\dfrac{1}{Q}\sum_{q=0}^{Q-1}\left|\left(\mathbf{f}_{ii,m}^{(q)}\right)^{\dagger}\mathbf{h}_{ji,m}^{(q)}\right|^2} \tag{9}$$

Dans le cas d'une estimation avant filtrage, l'estimation du SINR équivalent peut être réalisée à partir des échantillons avant filtrage $y_{i,m}^{(n)}(k)$ sur la durée $T_0$ de la manière suivante en supposant les symboles transmis $s_{i,m}^{(Cq+c)}(k)$ et le canal estimé $\hat{h}_{ii,m}^{(Cq+c)}$ connus :

$$\hat{\gamma}_{i,m} = \frac{\dfrac{1}{T_0 CQ}\sum_{k,c,q}\hat{\mathbf{h}}_{ii,m}^{(q)\dagger}y_{i,m}^{(Cq+c)}(k)s_{i,m}^{(Cq+c)\dagger}(k)}{\dfrac{1}{T_0 CQ}\sum_{k,c,q}\left(y_{i,m}^{(Cq+c)}(k) - \hat{\mathbf{h}}_{ii,m}^{(Cq+c)}s_{i,m}^{(n)}(k)\right)^{\dagger}\left(y_{i,m}^{(Cq+c)}(k) - \hat{\mathbf{h}}_{ii,m}^{(Cq+c)}s_{i,m}^{(n)}(k)\right)}$$

$$\simeq \frac{P_{i,m}\dfrac{1}{Q}\sum_{q=0}^{Q-1}\left(\mathbf{h}_{ii,m}^{(q)}\right)^{\dagger}\mathbf{h}_{ii,m}^{(q)}}{\sigma_i^2 + \sum_{j\neq i}P_{j,m}\dfrac{1}{Q}\sum_{q=0}^{Q-1}\left(\mathbf{h}_{ii,m}^{(q)}\right)^{\dagger}\mathbf{h}_{ji,m}^{(q)}} \tag{10}$$

Soit le SINR théorique associé:

$$\gamma_{i,m} = \frac{P_{i,m}\dfrac{1}{Q}\sum_{q=0}^{Q-1}\left(\mathbf{h}_{ii,m}^{(q)}\right)^{\dagger}\mathbf{h}_{ii,m}^{(q)}}{\sigma_i^2 + \sum_{j\neq i}P_{j,m}\dfrac{1}{Q}\sum_{q=0}^{Q-1}\left(\mathbf{h}_{ii,m}^{(q)}\right)^{\dagger}\mathbf{h}_{ji,m}^{(q)}}$$

$$= \frac{g_{ii,m}P_{i,m}}{1 + \sum_{j\neq i}g_{ji,m}P_{j,m}}$$

$$g_{ii,m} = \frac{\frac{1}{Q}\sum_{q=0}^{Q-1}\left(\mathbf{h}_{ii,m}^{(q)}\right)^{\dagger}\mathbf{h}_{ii,m}^{(q)}}{\sigma_i^2} \in \mathbb{R}^{+} \quad \forall j \neq i \quad g_{ji,m} = \frac{\frac{1}{Q}\sum_{q=0}^{Q-1}\left(\mathbf{h}_{ji,m}^{(q)}\right)^{\dagger}\mathbf{h}_{ji,m}^{(q)}}{\sigma_i^2} \in \mathbb{R}^{+}$$

où                                    et                                    sont définis comme les canaux équivalents (appartenant à l'ensemble des réels $\mathbb{R}^{+}$) entre l'émetteur j et le récepteur i pour la bande m. Dans le cas où $N_R$ =1 et $Q$ =1, il vient :

$$g_{ii,m} = \frac{\left|h_{ii,m}^{(0)}\right|^2}{\sigma_i^2} \in \mathbb{R}^{+} \quad \text{et} \quad \forall j \neq i \quad g_{ji,m} = \frac{\left|h_{ji,m}^{(0)}\right|^2}{\sigma_i^2} \in \mathbb{R}^{+}$$

Une coordination sur une durée très longue, supérieure à la durée Tc de cohérence du canal, permet de prendre en compte des évanouissements lents. Les coefficients $g_{ji,m}$ peuvent alors être moyennés (ou filtrés dans le temps) pour accéder à une échelle de fluctuation plus lente du type « shadowing ». Le SINR équivalent s'écrit formellement :

$$\gamma_{i,m} = \frac{E\left\{g_{ii,m}\right\}P_{i,m}}{1+\sum_{j\neq i}E\left\{g_{ji,m}\right\}P_{j,m}} \tag{11}$$

où $E\{g_{ji,m}\}$ est la moyenne stochastique (ou temporelle par ergodicité) du coefficient $g_{ji,m}$ sur la distribution des évanouissements rapides.

Finalement, l'expression du SINR équivalent peut se mettre sous la forme d'une fonction $f$ des canaux équivalents ($g_{ji,m}$ ou $E\{g_{ji,m}\}$) de l'émetteur j vers le récepteur i pour la sous-bande m et des puissances d'émissions des K émetteurs $P_{i,m}$ :

$$\gamma_{i,m} = f\left(\left\{P_{i,m}\right\}_{i=1}^{K}, \left\{g_{ji,m}\right\}_{j=1}^{K}\right) \text{ ou } \gamma_{i,m} = f\left(\left\{P_{i,m}\right\}_{i=1}^{K}, E\left\{g_{ji,m}\right\}_{j=1}^{K}\right) \tag{12}$$

expression dans laquelle $g_{ji,m}$ est supposé être un réel non-négatif (ou quantifié avec un nombre suffisant de bits) et dans laquelle la puissance $P_{i,m}$ émise sur le canal m par le point d'accès i appartient à un espace discret.

L'invention est décrite en détail en considérant à titre d'illustration un système de communication sans fil dit système WiFi comprenant K point d'accès et K stations qui communiquent respectivement avec les points d'accès, K>1.

Selon le standard IEEE 802.11n, chaque point d'accès émet sur un canal qui occupe une bande B autour d'une fréquence porteuse, par exemple B=20MHz occupée par 52 sous porteuses OFDM. Selon le standard IEEE802.11n, on distingue dans certaines configurations 13 fréquences porteuses WiFi définissant 13 canaux décalés de 5MHz. Le nombre de canaux pouvant être sélectionnés est donc restreint. Dans cette configuration, il y a donc une forte probabilité de sélection du même canal WiFi ou de canaux voisins pour des points d'accès différents et donc d'interférence entre canaux utilisés par des points d'accès géographiquement voisins. Deux points d'accès sont voisins si une même station parmi les K stations détecte les deux points d'accès.

Pour exemple, en prenant comme hypothèse que le canal WiFi est déjà sélectionné par les points d'accès, les M canaux pris en compte par le procédé sont alors ceux correspondant aux sous porteuses OFDM. Le procédé selon l'invention se propose donc de déterminer une allocation de puissance pour les M=52 sous porteuses pour les K points d'accès du système de télécommunication qui émettent sur le même canal WiFi à destination respectivement de K stations WiFi. Pour chaque canal m parmi les M canaux associés aux M=52 sous porteuses, la qualité du canal de communication entre le point d'accès $i \in \{1,2,...,K\}$ et la station $j \in \{1,2,...,K\}$ est représentée par le coefficient $g_{ij,m} \geq 0$. Dans ce cas, N=1 (porteuse) dans l'équation (6).

Selon un autre exemple, le procédé a pour objectif de participer à la sélection du canal WiFi par les points d'accès. Les M canaux pris en compte par le procédé sont alors ceux correspondant aux fréquences porteuses WiFi qui définissent 13 canaux décalés de 5MHz. Dans ce cas, N=52 porteuses dans l'équation (6). Le procédé selon l'invention se propose donc de déterminer une allocation de puissance pour les M=13 canaux pour les K points d'accès du système de télécommunication qui émettent sur un des 13 canaux WiFi à destination respectivement de K stations WiFi. Pour chaque canal m parmi les M=13 canaux, la qualité du canal de communication entre le point d'accès $i \in$

{1,2,...,$K$} et la station $j \in$ {1,2,...$K$} est représentée par le coefficient $g_{jj,m} \geq 0$.

Le SINR est supposé avoir une structure du type correspondant à celle d'un récepteur sans annulation d'interférence, son expression générale (12) peut être donnée par une des relations (8)-(11). Toutefois, le procédé peut tout aussi bien être utilisé avec des récepteurs à annulation d'interférence. Dans ce cas, seule l'expression du SINR est modifiée pour prendre en compte les interférences annulées ; c'est uniquement le nombre de signaux interféreurs qui change dans le dénominateur du SINR.

Le système peut être schématisé par la figure 1 lorsque K=2 et M=2. Les deux émetteurs sont ceux des deux points d'accès AP1 et AP2. Les deux récepteurs sont ceux des deux stations STA1 et STA2. Les deux canaux ou bandes considérés sont désignés par Ch1 et Ch2.

Pour un K quelconque, chaque émetteur APi dispose d'une estimation du gain de canal direct et des gains de canaux interférant son récepteur STAi, c'est-à-dire des $\hat{g}_{ji,m}$ pour tout $j \in$ {1,...,$K$} et pour tout $m \in$ {1,2,...,$M$}. L'estimée du gain de canal $g_{ji,m}$ est notée $\hat{g}_{ji,m}$ La connaissance des gains de canaux peut être acquise selon plusieurs modes de réalisation.

Selon un premier mode de réalisation du procédé, l'acquisition par l'émetteur i de la connaissance des gains de canaux pour tout $j \in$ {1,...,$K$} et pour tout $m \in$ {1,2,...,$M$} est effectuée selon des méthodes connues d'estimation des gains de canaux.

Selon un deuxième mode de réalisation du procédé, l'émetteur i est supposé ne pas connaître un certain nombre L de canaux incidents à son récepteur i, ce nombre L étant inférieur ou égal à K.

L'acquisition est alors effectuée pendant une phase Ph1 dont le déroulement temporel est illustré sur la figure 2. Pendant cette phase Ph1, les K émetteurs émettent simultanément respectivement K séquences. Une séquence est une succession de T1 sous trames (de durée $T_0$) de respectivement T1 vecteurs de niveaux déterminés de puissance, la dimension d'un vecteur étant égale au nombre M de bandes. Ces séquences sont comparables à des séquences d'apprentissage, elles sont connues des émetteurs. Après l'émission d'une sous trame, chaque émetteur i réceptionne par bande m le SINR normalisé ou pas remonté par son récepteur i. Cette phase Ph1 dite d'acquisition permet ainsi à l'émetteur i d'obtenir T1 estimations du SINR évalué par son récepteur pour une bande m donnée.

T1 étant strictement supérieur à 1 un émetteur i réceptionne au moins deux estimations d'un SINR remonté par son récepteur pour une bande m donnée. L'indice t de sous trame varie de 1 à T1, $t \in$ {1,2,...,$T1$}. Les puissances déterminées successives d'une séquence émise sont notées : $P_{i,m}(t)$, $t \in$ {1,2,...,$T1$}. Les SINR estimés et remontés à chaque sous-trame t par la station i sont notés : $\hat{\gamma}_{i,m}(t)$. En considérant que le SINR est normalisé, l'émetteur i résout alors le système de T1 équations par bande m :

$$\begin{cases} P_{i,m}(1)\hat{g}_{ii,m} - \sum_{j \neq i} P_{j,m}(1)\hat{\gamma}_{i,m}(1)\hat{g}_{ji,m} & = & \hat{\gamma}_{i,m}(1) \\ \vdots & \vdots & \vdots \\ P_{i,m}(T1)\hat{g}_{ii,m} - \sum_{j \neq i} P_{j,m}(T1)\hat{\gamma}_{i,m}(T1)\hat{g}_{ji,m} & = & \hat{\gamma}_{i,m}(T1) \end{cases} \qquad (14)$$

à L inconnues qui sont les gains de canaux $\hat{g}_{ji,m}$ pour $j \in$ {1,...,L} pour obtenir une estimation de ces L gains de canaux $\hat{g}_{ji,m}$.

Le choix du nombre T1 tel que $T1 \geq K$ assure que le système puisse être résolu selon l'équation (17). Un choix de T1 quelconque est possible pour la résolution de (14) par exemple si une estimation plus grossière est permise ou si des a priori sont disponibles. Par exemple, en TDD le coefficient $g_{ji,m}$ peut s'avérer disponible à l'émetteur i, ce qui élimine une inconnue et dans ce cas il est possible de choisir T1=K-1. Plus généralement, si l'émetteur i connait X coefficients alors il est possible de choisir T1=K-X. En outre, si la matrice des puissances émises est inversible, il est aisé de résoudre le système d'équations en inversant cette matrice.

Cette phase Ph1 dite d'acquisition permet d'obtenir une estimation d'au maximum K gains de canaux de transmission sur une bande m de fréquence entre le point d'accès j et la station i lorsque $T1 \geq K$.

Selon un mode de réalisation, la détermination des niveaux de puissance de la séquence d'apprentissage d'un émetteur est effectuée sous contrainte que la matrice $S_{i,m}$ suivante soit pseudo-inversible au sens de Moore Penrose, pour un canal m, avec une probabilité proche de un :

$$\mathbf{S}_{i,m} = \begin{pmatrix} -\hat{\gamma}_{i,m}(1)P_{1,m}(1) & -\hat{\gamma}_{i,m}(1)P_{2,m}(1) & \dots & P_{i,m}(1) & \dots & -\hat{\gamma}_{i,m}(1)P_{K,m}(1) \\ -\hat{\gamma}_{i,m}(2)P_{1,m}(2) & -\hat{\gamma}_{i,m}(2)P_{2,m}(2) & \dots & P_{i,m}(2) & \dots & -\hat{\gamma}_{i,m}(2)P_{K,m}(2) \\ \vdots & \vdots & & \vdots & & \vdots \\ -\hat{\gamma}_{i,m}(T1)P_{1,m}(T1) & -\hat{\gamma}_{i,m}(T1)P_{2,m}(T1) & \dots & P_{i,m}(T1) & \dots & -\hat{\gamma}_{i,m}(T1)P_{K,m}(T1) \end{pmatrix} \quad (15)$$

Selon un mode de réalisation, les niveaux de puissance $P_{i,m}(t)$, $t \in \{1,2,....T1\}$ déterminés des séquences d'apprentissage des émetteurs i forment une matrice $\Omega_{i,m}$ de rang plein :

$$\Omega_{i,m} = \begin{pmatrix} P_{1,m}(1) & P_{2,m}(1) & \dots & P_{i,m}(1) & \dots & P_{K,m}(1) \\ P_{1,m}(2) & P_{2,m}(2) & \dots & P_{i,m}(2) & \dots & P_{K,m}(2) \\ \vdots & \vdots & & \vdots & & \vdots \\ P_{1,m}(T1) & P_{2,m}(T1) & \dots & P_{i,m}(T1) & \dots & P_{K,m}(T1) \end{pmatrix} \quad (16)$$

Cette détermination peut consister à tirer aléatoirement chacune des séquences de puissances jusqu' à ce que la matrice $\Omega_{i,m}$ soit de rang plein.

Les gains de canaux peuvent alors être estimés selon la relation suivante :

$$\begin{pmatrix} \hat{g}_{1i,m} \\ \vdots \\ \hat{g}_{Ki,m} \end{pmatrix} = \left( \overline{\mathbf{S}_{i,m}} \mathbf{S}_{i,m} \right)^{-1} \overline{\mathbf{S}_{i,m}} \times \begin{pmatrix} \hat{\gamma}_{i,m}(1) \\ \vdots \\ \hat{\gamma}_{i,m}(T1) \end{pmatrix} \quad (17)$$

où $S_{i,m}$ désigne la matrice transposée de $S_{i,m}$. Lorsque le niveau de bruit sur le SINR tend vers zéro ou lorsque T1 devient grand alors les gains estimés $\hat{g}_{ji,m}$ tendent vers leurs vraies valeurs $g_{ji,m}$.

Le procédé comprend une phase Ph2 dite d'échange qui comprend une étape de codage, une étape d'estimation et une étape de décodage. Pendant la phase Ph2 d'échange, les K émetteurs émettent simultanément respectivement des séquences de T2 sous trames. Une séquence est une succession de T2 sous trames (de durée $T_0$) de respectivement T2 vecteurs de puissance codant les gains estimés $\hat{g}_{ji,m}$. Les vecteurs successifs de puissances codées d'une séquence émise sont notés : $\underline{P}_i(t)$, $\underline{P}_i(t) = (P_{i,1}(t),...,P_{i,M}(t))$. L'indice t de sous trame varie donc de 1 à T2, $t \in \{1,2,...,T2\}$, $T2 \geq 1$.

Pour l'émetteur i, le codage des niveaux de puissances consiste, dans sa formulation générale, à coder la connaissance de cet émetteur en termes d'état de canal en une suite de vecteurs de niveaux de puissances :

$$\phi_i : \begin{vmatrix} \mathcal{S}_i & \to & \mathcal{P}^{MT2} \\ \underline{s}_i & \mapsto & (\underline{P}_i(T1+1),...,\underline{P}_i(T1+T2)) \end{vmatrix} \quad (18)$$

où $\underline{s}_i \in \mathcal{S}_i$ représente la connaissance que l'émetteur a sur le super-vecteur de l'état du canal global $[\underline{g}_{11},\underline{g}_{12},...,\underline{g}_{KK}]$

avec $\underline{g}_{ij} = (g_{ij,1},...,g_{ij,M})$ et $\mathcal{P}$ représente l'alphabet auquel appartiennent les niveaux de puissance.

Le codage $\phi_i$, est de manière générale un codage source-canal conjoint et spatio-temporel. La dimension spatiale est donnée par M le nombre de canaux alors que la dimension temporelle est donnée par le nombre T2 de sous-trames pendant lesquelles les connaissances individuelles sont échangées entre les émetteurs.

Le codage $\phi_i$ peut tout aussi bien être un codage source-canal séparé, par sous bande m, i.e. $\phi_{i,m} = \phi_{i,m}^C \circ \phi_{i,m}^S$ par sous bande m. Dans ce cas, la fonction $\phi_{i,m}^S$ de codage source est choisie comme une opération de quantification vectorielle opérant sur le vecteur $(g_{1i,m},...,g_{Ki,m}) \in \mathbb{R}_+^K$ qui fait correspondre par l'emetteur i la connaissance des canaux incidents au recepteur i à un indice de cellule de quantification vectorielle k (L est le nombre de cellules) :

$$\phi_{i,m}^{S} : \begin{vmatrix} \mathbb{R}_{+}^{K} & \rightarrow & \{1,\ldots,L\} \\ (g_{1i,m},\ldots,g_{Ki,m}) & \mapsto & k \end{vmatrix} \qquad (19)$$

Le choix des cellules de quantification est fait par utilisation de l'algorithme de Lloyd-Max [3]. $\phi_{i,m}^{C}$ est l'opération de codage canal qui fait correpondre à un indice de cellule de quantification vectorielle une suite de puissances :

$$\phi_{i,m}^{C} : \begin{vmatrix} \{1,\cdots,L\} & \rightarrow & \mathcal{P}^{T2} \\ k & \mapsto & (P_{i,m}(T1+1),\ldots,P_{i,m}(T1+T2)) \end{vmatrix} \qquad (20)$$

Soit $p$ la cardinalité de $P$, le nombre de séquences possibles de puissance est donc $p^{T2} = 2^n$. Le codage canal consiste à selectionner un sous ensemble $C$, de cardinalité $2^k$, de ces séquences ce qui définit un codage de rendement $r = \dfrac{k}{n}$. Le nombre de cellules de quantification L donne la distorsion dûe à la quantification.

Selon un mode de réalisation, la distorsion est réduite en choisissant un nombre maximal de cellules, c'est-à-dire $L = p^{T2} = 2^n$. Le codage canal $\phi_{i,m}^{C}$ consiste simplement à faire correspondre à chaque indice de cellule une séquence de puissance. On a ainsi un codage de canal de rendement 1. Le représentant de chaque cellule de quantification est choisi de la manière suivante. Les cellules sont indicées de 1 à $p^{T2}$, $p$ étant la cardinalité de $P$. Pour chaque cellule, on peut calculer la probabilité que le vecteur de gain $(g_{1i,m},\ldots,g_{Ki,m}) \in \mathbb{R}_{+}^{K}$ appartienne à celle-ci. Il est alors possible d'ordonner ces cellules selon leur probabilité d'utilisation. Le procédé associe à la cellule de probabilité la plus élevée la séquence de niveaux de puissance $(P_{i,m}(T1+1),\ldots,P_{i,m}(T1+T2))$ dont la somme des composantes $\sum_{t=T1+1}^{T1+T2} P_{i,m}(t)$ est la plus élevée, c'est-à-dire la séquence des niveaux maximum de puissances sur la bande. Le procédé considère alors la deuxième cellule, soit de probabilité maximale, soit de probabilité juste inférieure, et lui associe la séquence de niveaux de puissance dont la somme est immédiatement inférieure et ainsi de suite. Ainsi l'ensemble des suites de niveaux de puissances $(P_{i,m}(T1+1),\ldots,P_{i,m}(T1+T2))$ se retrouve ordonné de manière à ce que la somme $\sum_{t=T1+1}^{T1+T2} P_{i,m}(t)$ soit décroissante.

Après l'émission d'une sous trame, chaque émetteur i réceptionne par bande m le SINR normalisé ou pas remonté par son récepteur i. Les SINR estimés et remontés à chaque sous-trame sont notés : $\hat{\gamma}_{i,m}(t)$. Un émetteur dispose ainsi à la fin de la succession de T2 sous trames de T2 estimations du SINR déterminées par son récepteur par bande m.

Selon un mode de réalisation, les canaux sont supposés quasi statiques, ils ne varient pas sur la durée de la transmission. L'émetteur $i$ possède des estimées des canaux dont son SINR dépend et les niveaux de puissances sont discrets. L'étape d'estimation se déroule alors de la manière suivante. Connaissant $P_{i,m}(t)$ l'émetteur $i$ calcule la quantité :

$$\gamma_{i,m}(\mathbf{x}_{i,m}(t)) = \frac{\hat{g}_{ii,m} P_{i,m}(t)}{1 + \sum_{j \neq i} \hat{g}_{ji,m} P_{j,m}(t)} \qquad (21)$$

où $x_{i,m}(t) = [P_{1,m}(t),\ldots,P_{i-1,m}(t),P_{i+1,m}(t),\ldots,P_{K,m}(t)]^{T}$ est le vecteur des puissances associées aux autres émetteurs. On définit le vecteur $\underline{x}_{i,m}$ sur l'ensemble de la trame T2 :

$$\underline{\mathbf{x}}_{i,m} = \left[ \mathbf{x}_{i,m}(T1+1),\cdots,\mathbf{x}_{i,m}(T1+T2) \right]^{T}$$

On définit le vecteur $\hat{\underline{y}}_{i,m}$ des SINR estimés :

$$\hat{\underline{y}}_{i,m} = \left[ \hat{\gamma}_{i,m}(T1+1), \cdots, \hat{\gamma}_{i,m}(T1+T2) \right]^{T}$$

L'estimation des niveaux de puissance consiste à choisir la séquence la plus vraisemblable (au sens du Maximum de Vraisemblance) c'est-à-dire la séquence qui maximise la distribution de probabilité $P(\hat{\underline{y}}_{i,m}|\mathbf{x}_{i,m})[\mathbf{x}_{i,m} \in C^{K-1}]$ où $[x]$ est égal à 1 si x est vrai et égal à 0 sinon. Le crochet de Iverson [.] impose que chaque séquence de puissance appartienne au dictionnaire C des séquences possibles (dictionnaire supposé le même pour chaque émetteur). A une séquence choisie correspond un indice de cellule, c'est-à-dire au décodage.

Soit le vecteur :

$$\underline{y}_{i,m} = \left[ \gamma_{i,m}\left(\mathbf{x}_{i,m}(T1+1)\right), \cdots, \gamma_{i,m}\left(\mathbf{x}_{i,m}(T1+T2)\right) \right]^{T}$$

Si l'on suppose que :

$$\hat{\underline{y}}_{i,m} = \underline{y}_{i,m} + \underline{n}$$

avec $\underline{n}$ qui suit une distribution Gaussienne dont la covariance est un multiple de l'identité. Alors, l'estimation selon le maximum de vraisemblance s'écrit :

$$\hat{\underline{x}}_{i,m} = \arg\min_{\mathbf{x}_{i,m} \in C^{K-1}} \left\| \hat{\underline{y}}_{i,m} - \underline{y}_{i,m} \right\|^{2} = \arg\min_{\mathbf{x}_{i,m} \in C^{K-1}} \sum_{t=T1+1}^{T1+T2} \left| \hat{\gamma}_{i,m}(t) - \gamma_{i,m}(\mathbf{x}_{i,m}(t)) \right|^{2} \quad (22)$$

Si le nombre $\hat{K}$ d'interféreurs effectifs est faible (typiquement un à quelques unités), l'émetteur $i$ peut en général approximer son SINR et tester de manière exhaustive les $p^{\hat{K}T2}$ configurations possibles. Ainsi pour $p = 8$ niveaux de puissances, $\hat{K} = 1$ interféreur dominant et $T2 = 3$ sous-trames, il y a 512 configurations à tester.

Selon un mode de réalisation, le procédé effectue une approximation du SINR en ne tenant compte que d'un nombre réduit d'interféreurs. Cette approximation découle d'une réduction de modèle. Cette réduction consiste à choisir une valeur pour $\hat{K}$, par exemple $\hat{K} = 1$. L'expression du SINR estimé par le récepteur i devient :

$$\hat{\gamma}_{i,m} = \frac{g_{ii,m}P_{i,m}}{1 + \sum_{j \in \mathcal{V}_{i,m}} g_{ji,m}P_{j,m}}.\quad (23)$$

Seul l'ensemble $\mathcal{V}_{i,m}$ est considéré comme influant pour l'estimation du SINR. Cet ensemble comprend le voisinage de la liaison ii sur le canal $m$. S'il n'y a qu'un seul intérféreur dominant, l'ensemble $\mathcal{V}_{i,m}$ des voisins ne comprend qu'un seul interféreur ($\mathcal{V}_{i,m}$ est un singleton). Si les ensembles $\mathcal{V}_{i,m}$ sont de cardinalités différentes alors selon un mode de réalisation, le procédé considère uniquement l'ensemble $V = \max_{(i,m)} |\mathcal{V}_{i,m}|$, où la notation |.| désigne la cardinalité d'un ensemble, pour l'expression des SINR estimés par les différents récepteurs.

En reprenant l'exemple illustré par la figure 1, le nombre d'interféreur est $V = 1$, il n'y a pas de besoin d'effectuer une réduction de modèle. Le nombre de canaux $M = 2$. Chaque émetteur est supposé avoir le choix entre seize niveaux de puissances d'émission (i.e., $|\mathcal{P}| = p = 16$) et chaque coefficient/gain de canal est supposé avoir été quantifié par une procédure quelconque et peut prendre quatre valeurs notées $g_{ij,m}^{(1)}, \cdots, g_{ij,m}^{(4)}$.

Pendant la phase d'acquisition, en fixant T1=2, les deux émetteurs AP1, AP2 transmettent en même temps pour chacun des deux canaux Ch1, Ch2 une première sous-trame puis une seconde sous-trame qui forment une séquence d'apprentissage. Pour chaque sous-trame, les émetteurs ont connaissance des niveaux de puissances utilisés par l'autre émetteur (phase d'apprentissage). A la fin d'une sous trame, chacun des points d'accès réceptionne le SINR remonté par sa station. Pour les deux points d'accès AP1 et AP2 les SINR remontés sont respectivement les suivants :

$$\begin{cases} \gamma_{1,1} = \dfrac{g_{11,1}P_{1,1}}{1+g_{21,1}P_{2,1}} \\[4mm] \gamma_{1,2} = \dfrac{g_{11,2}P_{1,2}}{1+g_{21,2}P_{2,2}} \end{cases} \text{et} \quad \begin{cases} \gamma_2^1 = \dfrac{g_{22}^1 P_2^1}{1+g_{12}^1 P_1^1} \\[4mm] \gamma_2^2 = \dfrac{g_{22}^2 P_2^2}{1+g_{12}^2 P_1^2} \end{cases}$$

A la fin de la séquence d'apprentissage en ce qui concerne le point d'accès AP1, pour le canal Ch1 (m=1), le système (14) linéaire d'équations à résoudre devient :

$$\begin{cases} P_{1,1}(1)\hat{g}_{11,1} - P_{2,1}(1)\hat{\gamma}_{1,1}(1)\hat{g}_{21,1} = \hat{\gamma}_{1,1}(1) \\[2mm] P_{1,1}(2)\hat{g}_{11,1} - P_{2,1}(2)\hat{\gamma}_{1,1}(2)\hat{g}_{21,1} = \hat{\gamma}_{1,1}(2) \end{cases}$$

où $P_{1,1}(1)$ est la puissance allouée par l'émetteur AP1 sur le canal Ch1 pour la sous-trame t=1, $P_{2,1}(1)$ est la puissance allouée par l'émetteur AP2 sur le canal Ch1 pour la sous-trame t=1, etc. Les inconnues du système sont $\hat{g}_{11,1}$ et $\hat{g}_{21,1}$, les autres quantités sont connues de l'émetteur AP1.

Pour le canal Ch2 (m=2), le système (14) linéaire d'équations à résoudre devient :

$$\begin{cases} P_{1,2}(1)\hat{g}_{11,2} - P_{2,2}(1)\hat{\gamma}_{1,2}(1)\hat{g}_{21,2} = \hat{\gamma}_{1,2}(1) \\[2mm] P_{1,2}(2)\hat{g}_{11,2} - P_{2,2}(2)\hat{\gamma}_{1,2}(2)\hat{g}_{21,2} = \hat{\gamma}_{1,2}(2) \end{cases}$$

où $P_{1,2}(1)$ est la puissance allouée par l'émetteur AP1 sur le canal Ch2 pour la sous-trame t=1, $P_{2,2}(1)$ est la puissance allouée par l'émetteur AP2 sur le canal Ch2 pour la sous-trame t=1, etc. Les inconnues du système sont $\hat{g}_{11,2}$ et $\hat{g}_{21,2}$, les autres quantités sont connues de l'émetteur AP1.

Pour le point d'accès AP1 la relation (17) pour estimer les gains de canaux devient :

$$\begin{pmatrix} \hat{g}_{11,m} \\[2mm] \hat{g}_{21,m} \end{pmatrix} = \left(\overline{\mathbf{S}_{1,m}}\mathbf{S}_{1,m}\right)^{-1}\overline{\mathbf{S}_{1,m}} \times \begin{pmatrix} \hat{\gamma}_{1,m}(1) \\[2mm] \hat{\gamma}_{1,m}(2) \end{pmatrix} \text{ avec } \mathbf{S}_{1,m} = \begin{pmatrix} P_{1,m}(1) & -\hat{\gamma}_{1,m}(1)P_{2,m}(1) \\[2mm] P_{1,m}(2) & -\hat{\gamma}_{1,m}(2)P_{2,m}(2) \end{pmatrix}$$

Et pour le point d'accès AP2 le système d'équations (14) devient :

$$\begin{cases} P_{2,m}(1)\hat{g}_{22,m} - P_{1,m}(1)\hat{\gamma}_{2,m}(1)\hat{g}_{12,m} = \hat{\gamma}_{2,m}(1) \\[2mm] P_{2,m}(2)\hat{g}_{22,m} - P_{1,m}(2)\hat{\gamma}_{2,m}(2)\hat{g}_{12,m} = \hat{\gamma}_{2,m}(2) \end{cases}$$

Et la relation (17) pour estimer les gains de canaux devient :

$$\begin{pmatrix} \hat{g}_{22,m} \\[2mm] \hat{g}_{12,m} \end{pmatrix} = \left(\overline{\mathbf{S}_{2,m}}\mathbf{S}_{2,m}\right)^{-1}\overline{\mathbf{S}_{2,m}} \times \begin{pmatrix} \hat{\gamma}_{2,m}(1) \\[2mm] \hat{\gamma}_{2,m}(2) \end{pmatrix} \text{ avec } \mathbf{S}_{2,m} = \begin{pmatrix} P_{2,m}(1) & -\hat{\gamma}_{2,m}(1)P_{1,m}(1) \\[2mm] P_{2,m}(2) & -\hat{\gamma}_{2,m}(2)P_{1,m}(2) \end{pmatrix}$$

Pendant la phase d'échange, le paramètre T2 est fixé à un, les gains estimés pendant la phase d'acquisition sont échangés pendant une sous trame. Le codage en niveau de puissance se déroule de la façon suivante. Pour tout $(ij,m)$, les valeurs possibles pour $g_{ij,m}$ sont ordonnées de la plus faible à la plus forte : $g_{ij,m}^{(1)}, \ldots, g_{ij,m}^{(4)}$. De même les

niveaux de puissances sont notés de manière à ce que la suite $P_{i,m}^{(1)},...,P_{i,m}^{(16)}$ soit une suite croissante. Pour l'émetteur AP1, le codage $\phi_{i,m}$ est choisi comme une application bijective $(g_{11,m}^{(\ell_1)}, g_{21,m}^{(\ell_2)}) \mapsto P_{i,m}^{(\ell)}$ pour $m \in \{1,2\}$, $\ell_1 \in \{1,...,4\}$, $\ell_2 \in \{1,...,4\}$, $\ell \in \{1,...,16\}$. L'émetteur AP2 fait de même pour les deux canaux Ch1 et Ch2. L'observation par l'émetteur APi du niveau de puissance de l'émettteur APj se fait au moyen de la remontée du SINR :

$$P_{j,m} = \frac{P_{i,m} g_{ii,m} - \gamma_{i,m}}{\gamma_{i,m} g_{ji,m}} \qquad\qquad (24)$$

L'APi détermine alors les gains de canaux de l'APj en appliquant :

$$(g_{1j,m}, g_{2j,m}) = \phi_{j,m}^{-1}(P_{j,m})$$

$$(25)$$

où $\phi_{j,m}^{-1}$ est l'application inverse de $\phi_{j,m}$. Ainsi, l'AP1 détermine $g_{12,1}$, $g_{22,1}$, $g_{12,2}$, $g_{22,2}$, et l'AP2 détermine $g_{11,1}$, $g_{21,1}$, $g_{11,2}$, $g_{21,2}$.

Selon un mode de réalisation du procédé, le procédé comprend en outre une phase Ph3 dite d'allocation de puissance pendant laquelle les K émetteurs déterminent leur puissance à émettre qui satisfasse un critère de maximisation des SINR des différentes stations :

$$\left(\underline{P}_1^*,...,\underline{P}_K^*\right) \in \arg \max_{(\underline{P}_1,...,\underline{P}_K) \in \mathcal{P}^{MK}} \sum_{i=1}^{K} \sum_{m=1}^{M} f_{i,m}(\gamma_{i,m}) \qquad\qquad (26)$$

où $f_{i,m}$ est une fonction qui définit le critère de performance de l'émetteur i, par exemple :

$$f_{i,m}(x) = \log(1+x). \qquad\qquad (27)$$

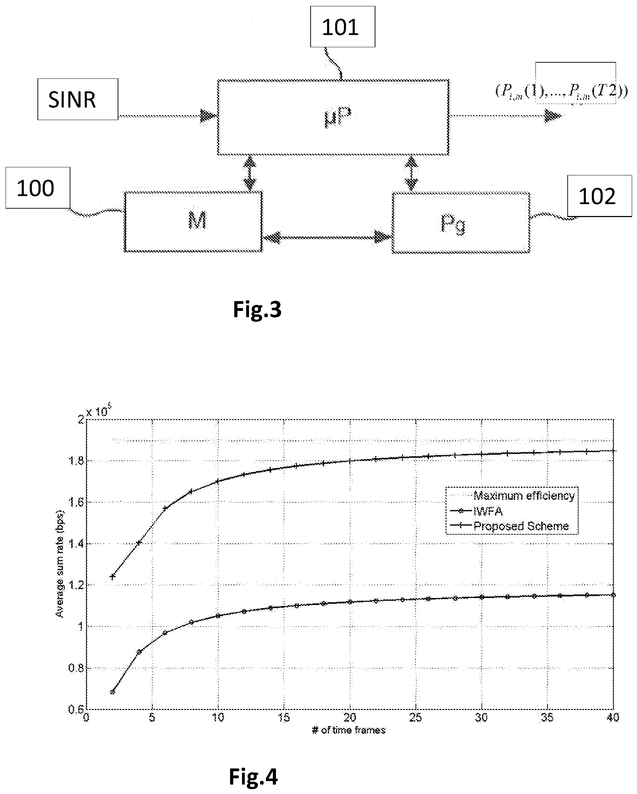

La structure simplifiée d'un émetteur mettant en oeuvre un procédé de coordination selon l'invention est décrit en relation avec la figure 4. L'émetteur est une partie d'un point d'accès WiFi, d'une station de base d'un réseau cellulaire, d'une femto cell, etc. L'émetteur fait partie d'un système de télécommunication tel que celui représenté à la figure 2. L'émetteur est en communication avec un récepteur du système. Les canaux de communication sont décrits pour une bande m de fréquence par des gains $g_{jj,m}$ de canaux de transmission directs lorsque $j = i$ et des gains $g_{ji,m}$ de canaux de transmission interférents lorsque $j \neq i$ entre l'émetteur j et le récepteur i. L'émetteur dispose d'une estimation du gain de canal direct et des gains de canaux interférant son récepteur.

Un tel émetteur AP1, AP2 comprend un module de mémorisation 100 comprenant une mémoire tampon RAM, une unité de traitement 101, équipée par exemple d'un microprocesseur μP et pilotée par le programme d'ordinateur 102, mettant en oeuvre le procédé de coordination selon l'invention.

A l'initialisation, les instructions de code du programme d'ordinateur 102 sont par exemple chargées dans la mémoire RAM avant d'être exécutées par le processeur de l'unité de traitement 101. Le microprocesseur de l'unité de traitement 101 met en oeuvre les étapes du procédé de coordination décrit précédemment, selon les instructions du programme d'ordinateur 102, pour émettre une trame de T2 sous trames de respectivement T2 niveaux de puissance $(P_{i,m}(1),...,P_{i,m}(T2))$. L'unité de traitement 101 exploitent en entrée les estimations des gains de canaux et les rapports de signal à interférence plus bruit remontés par le récepteur.

Pour cela, l'émetteur comprend :

- un module d'émission d'une séquence de T2 sous trames de respectivement T2 niveaux de puissance par bande m,
- un module de réception d'estimations d'un SINR en provenance de son récepteur.

Lors de l'exécution par le processeur de l'unité de traitement 101 des instructions de code du programme d'ordinateur 102 :

- l'unité de traitement 101 récupère les gains $\hat{g}_{ji,m}$ de canaux estimés, par exemple depuis le module de mémorisation 100,
- l'unité de traitement 101 code ces estimations en une séquence de T2 niveaux de puissance $(P_{i,m}(1),..., P_{i,m}(T2))$ par bande m,
- le module d'émission émet la séquence,
- le module de réception réceptionne T2 estimations d'un SINR en provenance du récepteur.

Selon un exemple de mise en oeuvre, le procédé selon l'invention est utilisé dans un contexte de sélection de canal par des points d'accès AP1, AP2 et des stations SAT1, STA2 compatibles d'une norme IEEE 802.11xx dite WiFi. Quelle que soit la version considérée de la norme WiFi, le récepteur STA1, STA2 peut effectuer une estimation du SINR. Le récepteur i remonte à son émetteur respectif via une voie de retour une estimation de ce SINR. La voie de retour primitive et toujours disponible est la voie ACK/NACK qui peut être utilisée pour coder le SINR sur plusieurs bits, un ACK/NACK représentant un bit. Les versions avancées du standard IEEE 802.11 telles que IEEE 802.11n et suivantes spécifient une voie de retour plus évoluée (de type quantized CSI, 3 de ces modes sont spécifiés dans la version IEEE 802.11n) qui peut être utilisée pour remonter le SINR périodiquement. A l'issue des phases d'acquisition Ph1 et d'échange Ph2, chaque émetteur peut tester de manière exhaustive l'ensemble des meilleures sélections de canaux.

Par exemple, s'il y a M=13 canaux possibles et K=5 émetteurs actifs, cela revient à tester $13^5 = 371293$ configurations possibles pour tout le système, ce qui est très facile à faire avec la technologie actuelle. Chaque émetteur peut par exemple choisir le super-vecteur de puissance :

$$\underline{x} = \left[ P_{1,1}, \cdots, P_{1,M}, P_{2,1}, \cdots, P_{2,M}, \cdots, P_{K,1}, \cdots P_{K,M} \right]^T$$

$K$ M qui maximise le critère global de performance : $G = \sum_{i=1}^{K} u_i$ avec $u_i = \sum_{m=1}^{M} \log_2(1 + \gamma_{i,m})$ sous les contraintes $C_1$, $C_2$ (les SINR étant définis comme précédemment). La contrainte $C_1$ est telle que chaque composante du vecteur ne peut prendre que deux valeurs (0 ou Pmax). La contrainte $C_2$ est telle que le vecteur d'allocation de puissance d'un émetteur donné ne peut avoir qu'une seule composante non nulle.

Selon un mode de réalisation plus particulier, le procédé prend en compte en outre la contrainte $C_3$. La contrainte $C_3$ est telle qu'une bande ne peut être allouée qu'à un seul émetteur. Alors le gain optimal $G_{max}$ devient sous les

$$G_{max} = \max_{\underline{x}\, s.t.\, C_1 \cap C_2 \cap C_3} G = \max_f \sum_{i=1}^{K} \log\left(1 + g_{ii,f(i)} P_{max}\right)$$

contraintes $C_1$, $C_2$, $C_3$ :                                                                      avec s.t. $C_1 \cap C_2 \cap C_3$ signifiant sous les contraintes conjointes $C_1$, $C_2$, $C_3$. La maximisation se fait sur toutes les injections f de $\{1,...,K\}$ vers $\{1,...,M\}$ soit sur

$$A_K^M = \frac{M!}{(M-K)!} = 154440$$

injections f. Choisir une telle injection revient en effet à choisir un vecteur de puissance dont les composantes vérifient les trois contraintes considérées. A noter que selon ce mode particulier, seule la connaissance de l'ensemble des $\left\{ g_{ii,m} \right\}_{i=1}^{K}$ $\forall m$ est nécessaire à chaque émetteur.

Des résultats de simulation sont illustrés par la figure 4. Les simulations ont été faites avec les paramètres suivants de configuration :

- le système comprend deux émetteurs et deux récepteurs,
- largeur d'un canal $B_m$ = 10 kHz,
- SNR = SINR (en l'absence d'interférence) = 40 dB,
- coefficients de canal : $g_{ii,m}$ = 1 and $g_{ij,m}$ = 0.5 pour $i \neq j$,
- critère de performance selon (5) plus moyennage sur les coefficients de canal tirés selon une loi de Rayleigh.

Selon les résultats présentés sous forme de deux courbes, une pour l'algorithme IWFA, une autre pour le procédé selon l'invention, on constate que le procédé selon l'invention permet de se rapprocher de la limite ultime prise comme référence et obtenue avec un système centralisé. Le gain en débit de transmission est d'environ 60% par rapport à la solution IWFA.

**EP 3 075 088 B1**

Références :

[1] : US 2012/083201 A1

[2] : G. Scutari, D. P. Palomar, and S. Barbarossa, "The MIMO iterative waterfilling algorithm," IEEE Trans. Signal Process., Vol. 57, No. 5, pp. 1917-1935, May 2009.

[3] : Robert M. Gray, David L. Neuhoff, "Quantization", IEEE Trans. on Inf. Theory, 1998

[4]: Larousse Benjamin et al: « Coded power control : Performance analysis », 2013 IEEE International symposium on information theory, IEEE, 7 juillet 2013, pages 3040-3044, ISSN : 2157-8095, DOI :10.1109/ISIT 2013.6620784.

## Revendications

1. Procédé (1) de coordination d'un émetteur avec K-1 émetteurs, les K émetteurs étant en communication respectivement avec K récepteurs via des canaux caractérisés, pour une bande m de fréquence entre l'émetteur j et le récepteur i, par des gains ($g_{ji,m}$) de canaux de transmission directs lorsque $j = i$ et des gains ($g_{ji,m}$) de canaux de transmission interférents lorsque $j \neq i$, $i \in \{1,...,K\}$, $j \in \{1,...,K\}$, K>1, $m \in \{1,...,M\}$, **caractérisé en ce qu'**il comprend :

   - une phase d'acquisition (Ph1) pendant laquelle les K émetteurs émettent simultanément respectivement des séquences de T1 sous trames de respectivement T1 niveaux de puissance déterminés, pendant laquelle chaque émetteur réceptionne après chaque sous trame une estimation d'un rapport signal à interférence plus bruit, SINR, remontée par son récepteur, chaque émetteur $j$ effectuant une estimation du gain de canal direct et des gains de canaux interférant son récepteur à partir des $T1$ rapports signal à interférence plus bruit, SINR, remontés par son récepteur connaissant les $T1$ niveaux de puissance émis successivement pendant les T1 sous trames par chacun des $K - 1$ émetteurs,
   - une phase dite d'échange (Ph2) pendant laquelle les K émetteurs émettent simultanément respectivement K séquences de T2 sous trames de respectivement T2 niveaux de puissance par bande m codant en niveaux de puissance les gains de canaux estimés ($\hat{g}_{ji,m}$) pendant la phase d'acquisition et pendant laquelle les K émetteurs réceptionnent après chaque sous trame des estimations de SINR basées sur des observations d'un signal reçu et remontées par les K récepteurs à leur émetteur respectif, $T2 \geq 1$ et chaque émetteur détermine les gains de canaux estimés ($\hat{g}_{ji,m}$) par décodage des niveaux de puissance des puissances émises grâce aux estimations de SINR remontées.

2. Procédé (1) de coordination de K émetteurs selon la revendication 1 dans lequel le nombre T1 de sous trames est égal à K.

3. Procédé (1) de coordination de K émetteurs selon la revendication 1 dans lequel le nombre T1 de sous trames est égal à K-X avec X le nombre de gains de canaux connus d'un émetteur.

4. Procédé (1) de coordination de K émetteurs selon l'une des revendications 1 à 3 dans lequel la détermination des niveaux de puissance de la séquence de T1 sous trames d'un émetteur est effectuée sous contrainte que la matrice $S_{i,m}$ soit pseudo-inversible au sens de Moore Penrose avec une probabilité proche de un, cette matrice $S_{i,m}$ étant :

$$S_{i,m} = \begin{pmatrix} -\hat{\gamma}_{i,m}(1)P_{1,m}(1) & -\hat{\gamma}_{i,m}(1)P_{2,m}(1) & ... & P_{i,m}(1) & ... & -\hat{\gamma}_{i,m}(1)P_{K,m}(1) \\ -\hat{\gamma}_{i,m}(2)P_{1,m}(2) & -\hat{\gamma}_{i,m}(2)P_{2,m}(2) & \cdots & P_{i,m}(2) & \cdots & -\hat{\gamma}_{i,m}(2)P_{K,m}(2) \\ \vdots & \vdots & & \vdots & & \vdots \\ -\hat{\gamma}_{i,m}(T1)P_{1,m}(T1) & -\hat{\gamma}_{i,m}(T1)P_{1,m}(T1) & \cdots & P_{i,m}(T1) & \cdots & -\hat{\gamma}_{i,m}(T1)P_{K,m}(T1) \end{pmatrix}$$

avec $\hat{\gamma}_{i,m}(t)$ l'estimation du rapport signal à interférence plus bruit remonté par le récepteur i à l'émetteur i, $P_{i,m}(t)$ les niveaux déterminés de puissance de la séquence de T1 sous trames, $t \in \{1,2,...,T1\}$.

**5.** Procédé (1) de coordination de K émetteurs selon l'une des revendications 1 à 3 dans lequel la détermination des niveaux de puissance de la séquence de T1 sous trames d'un émetteur est effectuée selon un tirage aléatoire

$$\Omega_{i,m} = \begin{pmatrix} P_{1,m}(1) & P_{2,m}(1) & \dots & P_{i,m}(1) & \dots & P_{K,m}(1) \\ P_{1,m}(2) & P_{2,m}(2) & \cdots & P_{i,m}(2) & \cdots & P_{K,m}(2) \\ \vdots & \vdots & & \vdots & & \vdots \\ P_{1,m}(T1) & P_{2,m}(T1) & \cdots & P_{i,m}(T1) & \cdots & P_{K,m}(T1) \end{pmatrix}$$

jusqu'à ce que la matrice $\Omega_{i,m}$ soit de rang plein : avec $P_{i,m}(t)$ les niveaux déterminés de puissance de la séquence de T1 sous trames, $t \in \{1,2,...,T1\}$.

**6.** Procédé (1) de coordination de K émetteurs selon l'une des revendications précédentes dans lequel le codage en niveaux de puissance est un codage source-canal conjoint de type spatio-temporel dont la dimension spatiale correspond au nombre M de canaux m et la dimension temporelle correspond au nombre T2 de sous-trames.

**7.** Procédé (1) de coordination de K émetteurs selon l'une des revendications 1 à 5 dans lequel le codage en niveaux de puissance est un codage source-canal séparé.

**8.** Procédé (1) de coordination de K émetteurs selon l'une des revendications 1 à 7 dans lequel l'estimation des rapports signal à interférence plus bruit est effectuée avant filtrage, ce filtrage étant associé à une détection du signal reçu.

**9.** Emetteur (AP1, AP2), destiné à mettre en oeuvre un procédé de coordination avec K-1 émetteurs, les K émetteurs étant en communication respectivement avec K récepteurs via des canaux caractérisés, pour une bande m de fréquence entre l'émetteur j et le récepteur i, par des gains ($g_{ji,m}$) de canaux de transmission directs lorsque $j = i$ et des gains ($g_{ji,m}$) de canaux de transmission interférents lorsque $j \neq i$, $i \in \{1,...,K\}$, $j \in \{1,...,K\}$, m $\in \{1,...,M\}$, K>1, l'émetteur comprenant :

- un module d'émission d'une séquence de T1 sous trames de T1 niveaux de puissance déterminés émise simultanément avec des séquences émises par les $K$ - 1 émetteurs de T1 sous trames de respectivement T1 niveaux de puissance déterminés,
- un module de réception d'une estimation d'un rapport signal à interférence plus bruit, SINR, remontée par son récepteur après chaque sous trame,

**caractérisé en ce qu'**il comprend :

- une unité de traitement pour effectuer une estimation du gain de canal direct et des gains de canaux interférant son récepteur à partir des $T$1 rapports signal à interférence plus bruit, SINR, remontés par son récepteur connaissant les $T$1 niveaux de puissance émis successivement pendant les T1 sous trames par chacun des $K$ - 1 émetteurs,
- une unité de traitement (101) pour coder en niveaux de puissance les gains de canaux estimés en une séquence de T2 sous trames de respectivement T2 niveaux de puissance par bande m,
- un module d'émission de la séquence,
- un module de réception de valeurs estimées d'un SINR remontées par le récepteur après chaque sous-trame,
- une unité de traitement pour déterminer les gains de canaux estimés ($\hat{g}_{ji,m}$) par décodage des niveaux de puissance des puissances émises grâce aux estimations de SINR remontées.

**10.** Système de télécommunication comprenant K émetteurs selon la revendication précédente.

**11.** Programme d'ordinateur sur un support d'information, ledit programme comportant des instructions de programme adaptées à la mise en oeuvre d'un procédé de coordination de K émetteurs selon l'une quelconque des revendications 1 à 8, lorsque ledit programme est chargé et exécuté dans les K émetteurs destinés à mettre en oeuvre le procédé de coordination.

**12.** Support d'informations comportant des instructions de programme adaptées à la mise en oeuvre d'un procédé de coordination selon l'une quelconque des revendications 1 à 8, lorsque ledit programme est chargé et exécuté dans K émetteurs destinés à mettre en oeuvre le procédé de coordination.

**Patentansprüche**

1. Verfahren (1) zum Koordinieren eines Senders mit K-1 Sendern, wobei die K Sender mit jeweils K Empfängern über Kanäle in Verbindung sind, die für ein Frequenzband m zwischen dem Sender j und dem Empfänger i durch Zugewinne ($g_{ji,m}$) von direkten Übertragungskanälen, wenn j=i, und durch Zugewinne ($g_{ji,m}$) von interferierenden Übertragungskanälen, wenn j≠i, i$\varepsilon$\{1,...,K\}, j$\varepsilon$\{1,...,K\}, K>1, m$\varepsilon$\{1,...M\}, **gekennzeichnet sind, dadurch** gekennzeichnet, dass es umfasst:

   - eine Erfassungsphase (Ph1), während der die K Sender gleichzeitig jeweils Sequenzen von T1 Teilrahmen von jeweils T1 bestimmten Energieniveaus senden, während der jeder Sender nach jedem Teilrahmen eine Schätzung eines Signal zu Interferenz plus Rausch-Verhältnisses, SINR, das von seinem Empfänger hochgefahren wird, empfängt, wobei jeder Sender j eine Schätzung des direkten Kanalzugewinns und der interferierenden Kanalzugewinne seines Empfänger auf Basis der T1 Signal zu Interferenz plus Rausch-Verhältnisse, SINR, die von einem Empfänger hochgefahren werden, bei Kenntnis der T1 Energieniveaus, die nacheinander während der T1 Teilrahmen für jeden der K-1 Sender gesandt werden, durchführt,
   - eine so genannte Austauschphase (Ph2), während der die K Sender gleichzeitig jeweils K Sequenzen von T2 Teilrahmen von jeweils T2 Energieniveaus pro Band m, das in Energieniveaus die geschätzten Kanalzugewinne ($\hat{g}_{ji,m}$) während der Erfassungsphase codiert, und während der die K Sender nach jedem Teilrahmen Schätzungen von SINR basierend auf Beobachtungen eines empfangenen und hochgefahren durch die K Empfänger an ihren jeweiligen Sender , T2≥1, empfangen, und jeder Sender die geschätzten Kanalzugewinne ($\hat{g}_{ji,m}$) durch Decodierung der Energieniveaus der gesandten Energien dank der hochgefahrenen Schätzungen von SINR bestimmt.

2. Verfahren (1) zum Koordinieren von K Sendern nach Anspruch 1, bei dem die Anzahl T1 von Teilrahmen gleich K ist.

3. Verfahren (1) zum Koordinieren von K Sendern nach Anspruch 1, bei dem die Anzahl T1 von Teilrahmen gleich K-X ist, wobei X die Anzahl von bekannten Kanalzugewinnen eines Senders ist.

4. Verfahren (1) zum Koordinieren von K Sendern nach einem der Ansprüche 1 bis 3, bei dem die Bestimmung der Energieniveaus der Sequenz von T1 Teilrahmen eines Senders unter der Bedingung durchgeführt wird, dass die Matrix $S_{im}$ pseudoinvertierbar im Sinne von Moore Penrose mit einer Wahrscheinlichkeit nahe eins ist, wobei diese Matrix $S_{im}$ lautet:

$$S_{i,m} = \begin{pmatrix} -\hat{\gamma}_{i,m}(1)P_{1,m}(1) & -\hat{\gamma}_{i,m}(1)P_{2,m}(1) & \dots & P_{i,m}(1) & \dots & -\hat{\gamma}_{i,m}(1)P_{K,m}(1) \\ -\hat{\gamma}_{i,m}(2)P_{1,m}(2) & -\hat{\gamma}_{i,m}(2)P_{2,m}(2) & \cdots & P_{i,m}(2) & \cdots & -\hat{\gamma}_{i,m}(2)P_{K,m}(2) \\ \vdots & \vdots & & \vdots & & \vdots \\ -\hat{\gamma}_{i,m}(T1)P_{1,m}(T1) & -\hat{\gamma}_{i,m}(T1)P_{1,m}(T1) & \cdots & P_{i,m}(T1) & \cdots & -\hat{\gamma}_{i,m}(T1)P_{K,m}(T1) \end{pmatrix}$$

wobei $\hat{y}_{i,m}(t)$ die Schätzung des Signal zu Interferenz plus Rausch-Verhältnisses ist, das vom Empfänger i an den Sender i hochgefahren wird, wobei $P_{i,m}(t)$ die bestimmten Energieniveaus der Sequenz von T1 Teilrahmen ist, t$\varepsilon$\{1,2,...,T1\}.

5. Verfahren (1) zum Koordinieren von K Sendern nach einem der Ansprüche 1 bis 3, bei dem die Bestimmung der Energieniveaus der Sequenz von T1 Teilrahmen eines Senders nach einer Zufallsauswahl erfolgt, bis die Matrix $\Omega_{i,m}$ vollen Ranges ist:

$$\Omega_{i,m} = \begin{pmatrix} P_{1,m}(1) & P_{2,m}(1) & \dots & P_{i,m}(1) & \dots & P_{K,m}(1) \\ P_{1,m}(2) & P_{2,m}(2) & \cdots & P_{i,m}(2) & \cdots & P_{K,m}(2) \\ \vdots & \vdots & & \vdots & & \vdots \\ P_{1,m}(T1) & P_{2,m}(T1) & \cdots & P_{i,m}(T1) & \cdots & P_{K,m}(T1) \end{pmatrix}$$

wobei $P_{i,m}(t)$ die bestimmten Energieniveaus der Sequenz von T1 Teilrahmen ist, t$\varepsilon$\{1,2,...,T1\}.

6. Verfahren (1) zum Koordinieren von K Sendern nach einem der vorhergehenden Ansprüche, bei dem die Codierung in Energieniveaus eine gemeinsame Quelle-Kanal-Codierung vom räumlich-zeitlichen Ty ist, deren Raumdimension der Anzahl M von Kanälen m und deren Zeitdimension der Anzahl T2 von Teilrahmen entspricht.

7. Verfahren (1) zum Koordinieren von K Sendern nach einem der Ansprüche 1 bis 5, bei dem die Codierung in Energieniveaus eine getrennte Quelle-Kanal-Codierung ist.

8. Verfahren (1) zum Koordinieren von K Sendern nach einem der Ansprüche 1 bis 7, bei dem die Schätzung der Signal zu Interferenz plus Rausch-Verhältnisse vor dem Filtern erfolgt, wobei diese Filtern einer Erfassung des empfangenen Signals zugeordnet ist.

9. Sender (AP1, AP2), der dazu bestimmt ist, ein Verfahren zum Koordinieren mit K-1 Sendern einzusetzen, wobei die K Sender mit jeweils K Empfängern über Kanäle in Verbindung sind, die für ein Frequenzband m zwischen dem Sender j und dem Empfänger i durch Zugewinne ($g_{ji,m}$) von direkten Übertragungskanälen, wenn j=i, und durch Zugewinne ($g_{ji,m}$) von interferierenden Übertragungskanälen, wenn j≠i, i$\epsilon${1,...,K}, j$\epsilon${1,...,K}, m$\epsilon${1,...M} }, K>1 gekennzeichnet sind, wobei der Sender umfasst:

- ein Modul zum Senden einer Sequenz von T1 Teilrahmen von T1 bestimmten Energieniveaus, die gleichzeitig mit Sequenzen gesandt wird, die von den K-1 Sendern von T1 Teilrahmen von jeweils T1 bestimmten Energieniveaus gesandt werden,
- ein Modul zum Empfang einer Schätzung eines Signal zu Interferenz plus Rausch-Verhältnisses, SINR, das von seinem Empfänger nach jedem Teilrahmen hochgefahren wird,

**dadurch gekennzeichnet, dass** er umfasst:

- eine Bearbeitungseinheit, um eine Schätzung des direkten Kanalzugewinns und der mit seinem Empfänger interferierenden Kanalzugewinne auf Basis der T1 Signal zu Interferenz plus Rausch-Verhältnisse, SINR, die von seinem Empfänger hochgefahren werden, bei Kenntnis der T1 Energieniveaus, die nacheinander während der T1 Teilrahmen von jedem der K-1 Sender gesandt werden, durchzuführen,
- eine Bearbeitungseinheit (101), um in Energieniveaus die geschätzten Kanalzugewinne in einer Sequenz von T2 Teilrahmen von jeweils T2 Energieniveaus pro Band m zu codieren,
- ein Modul zum Senden der Sequenz,
- ein Modul zum Empfang von geschätzten Werten eines SINR, die vom Empfänger nach jedem Teilrahmen hochgefahren werden,
- eine Bearbeitungseinheit, um die geschätzten Kanalzugewinne ($\hat{g}_{ji,m}$) durch Decodierung der Energieniveaus der gesandten Energien dank der hochgefahrenen Schätzungen von SINR zu bestimmen.

10. Telekommunikationssystem, umfassend K Sender nach dem vorhergehenden Anspruch.

11. Computerprogramm auf einem Informationsträger, wobei das Programm Programmanweisungen umfasst, die an den Einsatz eines Verfahrens zum Koordinieren von K Sendern nach einem der Ansprüche 1 bis 8 angepasst sind, wenn das Programm in die K Sender, die dazu bestimmt sind, das Verfahren zum Koordinieren einzusetzen, geladen und von diesen ausgeführt wird.

12. Informationsträger, umfassend Programmanweisungen, die an den Einsatz eines Verfahrens zum Koordinieren nach einem der Ansprüche 1 bis 8 angepasst sind, wenn das Programm in die K Sender, die dazu bestimmt sind, das Verfahren zum Koordinieren einzusetzen, geladen und von diesen ausgeführt wird.

**Claims**

1. Method (1) for coordinating a transmitter with K-1 transmitters, the K transmitters being in communication respectively with K receivers via channels which are characterized, for a frequency band m between the transmitter j and the receiver i, by gains ($g_{ji,m}$) of direct transmission channels when $j = i$ and gains ($g_{ji,m}$) of interfering transmission channels when $j \neq i$, $i \in \{1,..., K\}$, $j \in \{1,..., K\}$, $K>1$, $m \in \{1,..., M\}$,
**characterized in that** it comprises:

- an acquisition phase (Ph1) during which the K transmitters simultaneously transmit respectively sequences of T1 sub-frames of respectively T1 determined power levels and during which each transmitter receives after each sub-frame an estimation of a signal to interference plus noise ratio, SINR, which estimation being fed back by its receiver, each transmitter j performing an estimation of the direct channel gain and of the channel gains interfering its receiver on the basis of the T1 signal to interference plus noise ratios, SINR, which are fed back by its receiver knowing the T1 power levels transmitted successively during the T1 sub-frames by each of the K - 1 transmitters,

- a so-called exchange phase (Ph2) during which the K transmitters simultaneously transmit respectively K sequences of T2 sub-frames of respectively T2 power levels per band m coding as power levels the channel gains estimated ($\hat{g}_{ji,m}$) during the acquisition phase and during which the K transmitters receive after each sub-frame SINR estimations based on observations of a received signal and fed back by the K receivers to their respective transmitter, T2 ≥ 1 and each transmitter determines the channel gains estimated ($\hat{g}_{ji,m}$) by decoding the power levels of the powers transmitted by virtue of the SINR estimations fed back.

2. Method (1) for coordinating K transmitters according to Claim 1, in which the number T1 of sub-frames is equal to K.

3. Method (1) for coordinating K transmitters according to Claim 1, in which the number T1 of sub-frames is equal to K-X with X the number of known channel gains of a transmitter.

4. Method (1) for coordinating K transmitters according to one of Claims 1 to 3, in which the determination of the power levels of the sequence of T1 sub-frames of a transmitter is performed under the constraint that the matrix $S_{i,m}$ is pseudo-invertible in the Moore-Penrose sense with a probability of close to one, this matrix $S_{i,m}$ being:

$$S_{i,m} = \begin{pmatrix} -\hat{\gamma}_{i,m}(1)P_{1,m}(1) & -\hat{\gamma}_{i,m}(1)P_{2,m}(1) & \dots & P_{i,m}(1) & \dots & -\hat{\gamma}_{i,m}(1)P_{K,m}(1) \\ -\hat{\gamma}_{i,m}(2)P_{1,m}(2) & -\hat{\gamma}_{i,m}(2)P_{2,m}(2) & \cdots & P_{i,m}(2) & \cdots & -\hat{\gamma}_{i,m}(2)P_{K,m}(2) \\ \vdots & \vdots & & \vdots & & \vdots \\ -\hat{\gamma}_{i,m}(T1)P_{1,m}(T1) & -\hat{\gamma}_{i,m}(T1)P_{1,m}(T1) & \cdots & P_{i,m}(T1) & \cdots & -\hat{\gamma}_{i,m}(T1)P_{K,m}(T1) \end{pmatrix}$$

with $\hat{y}_{ji,m}(t)$ the estimation of the signal to interference plus noise ratio fed back by the receiver i to the transmitter i, $P_{i,m}(t)$ the determined power levels of the sequence of T1 sub-frames, $t \in \{1, 2 \dots TI\}$.

5. Method (1) for coordinating K transmitters according to one of Claims 1 to 3, in which the determination of the power levels of the sequence of T1 sub-frames of a transmitter is performed according to a random draw until the matrix $\Omega_{i,m}$ is of full rank:

$$\Omega_{i,m} = \begin{pmatrix} P_{1,m}(1) & P_{2,m}(1) & \dots & P_{i,m}(1) & \dots & P_{K,m}(1) \\ P_{1,m}(2) & P_{2,m}(2) & \cdots & P_{i,m}(2) & \cdots & P_{K,m}(2) \\ \vdots & \vdots & & \vdots & & \vdots \\ P_{1,m}(T1) & P_{2,m}(T1) & \cdots & P_{i,m}(T1) & \cdots & P_{K,m}(T1) \end{pmatrix}$$

with $P_{i,m}(t)$ the determined power levels of the sequence of T1 sub-frames, $t \in \{1,2,...,T1\}$.

6. Method (1) for coordinating K transmitters according to one of the preceding claims, in which the coding as power levels is a joint source-channel coding of spatio-temporal type whose spatial dimension corresponds to the number M of channels m and whose temporal dimension corresponds to the number T2 of sub-frames.

7. Method (1) for coordinating K transmitters according to one of Claims 1 to 5, in which the coding as power levels is a separate source-channel coding.

8. Method (1) for coordinating K transmitters according to one of Claims 1 to 7, in which the estimation of the signal to interference plus noise ratios is performed before filtering, this filtering being associated with a detection of the received signal.

9. Transmitter (AP1, AP2), intended to implement a method of coordination with K-1 transmitters, the K transmitters being in communication respectively with K receivers via channels which are characterized, for a frequency band m between the transmitter j and the receiver i, by gains ($g_{ji,m}$) of direct transmission channels when $j = i$ and gains ($g_{ji,m}$) of interfering transmission channels when $j \neq i$, $i \in \{1,..., K\}$, $j \in \{1,..., K\}$, $m \in \{1,..., M\}$, $K>1$, the transmitter comprising:

    - a module for transmitting a sequence of T1 sub-frames of T1 determined power levels, which sequence is transmitted simultaneously with sequences transmitted by the K-1 transmitters of T1 sub-frames of respectively T1 determined power levels,
    - a module for receiving an estimation of a signal to interference plus noise ratio, SINR, which estimation being fed back by its receiver after each sub-frame,

**characterized in that** it comprises:

    - a processing unit for performing an estimation of the direct channel gain and of the channel gains interfering its receiver on the basis of the T1 signal to interference plus noise ratios, SINR, which are fed back by its receiver knowing the T1 power levels transmitted successively during the T1 sub-frames by each of the K - 1 transmitters,
    - a processing unit (101) for coding as power levels the channel gains estimated as a sequence of T2 sub-frames of respectively T2 power levels per band m,
    - a module for transmitting the sequence,
    - a module for receiving estimated values of an SINR which are fed back by the receiver after each sub-frame,
    - a processing unit for determining the channel gains estimated ($\hat{g}_{ji,m}$) by decoding the power levels of the powers transmitted by virtue of the SINR estimations fed back.

10. Telecommunication system comprising K transmitters according to the preceding claim.

11. Computer program on an information medium, said program comprising program instructions suitable for the implementation of a method for coordinating K transmitters according to any one of Claims 1 to 8, when said program is loaded and executed in the K transmitters intended to implement the method of coordination.

12. Information medium comprising program instructions suitable for the implementation of a method of coordination according to any one of Claims 1 to 8, when said program is loaded and executed in K transmitters intended to implement the method of coordination.

Fig.1

Fig.2

**Fig.3**

**Fig.4**

**EP 3 075 088 B1**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 2012083201 A1

**Littérature non-brevet citée dans la description**

- **G. SCUTARI ; D. P. PALOMAR ; S. BARBAROS-SA.** The MIMO iterative waterfilling algorithm. *IEEE Trans. Signal Process.,* Mai 2009, vol. 57 (5), 1917-1935
- **ROBERT M. GRAY ; DAVID L. NEUHOFF.** Quantization. *IEEE Trans. on Inf. Theory,* 1998

- Coded power control : Performance analysis. **LAROUSSE BENJAMIN et al.** 2013 IEEE International symposium on information theory. IEEE, 07 Juillet 2013, 3040-3044